# EUROPEAN PATENT APPLICATION

(11) **EP 1 814 042 A1**
(43) Date of publication of application: **01.08.2007**
(21) Application number: 06256580.9
(22) Date of filing: 22.12.2006
(51) Int. Cl.: G06F 17/30

(54) **Apparatus and method of searching hierarchical directory structure for desired address information using user entered keyword**

(30) Priority: 27.12.2005 JP 2005374351
(71) Applicant: Brother Kogyo Kabushiki Kaisha, Nagoya-shi, Aichi-ken 467-8561 (JP)
(72) Inventor: Kawai, Sunao c/o Brother Kogyo Kabushiki Kaisha, Nagoya-shi Aichi-ken 467-8562 (JP)
(74) Representative: Smith, Samuel Leonard

(57) **Abstract**

A technique is disclosed of searching a hierarchical directory structure for desired address information. A plurality of directories are arranged in a multi-level hierarchical structure in association with a plurality of sets of address information. This technique includes: searching the hierarchical structure using at least one user-entered keyword as a search term, to thereby retrieve at least one associated directory; searching the hierarchical structure using the at least one associated directory, to thereby retrieve a sub-plurality of the plurality of sets of address information as a plurality of sets of candidate address information, the plurality of sets of candidate address information being associated with at least one subordinate directories being located at one or more lower levels than that of the at least one associated directory in the hierarchical structure; and accessing at least one arbitrary one of the plurality of sets of candidate address information.

## Description

### BACKGROUND OF THE INVENTION

### Field of the Invention

The invention relates to techniques of searching a hierarchical directory structure for desired address information.

### Description of the Related Art

In a typical communication network environment, various servers (i.e., online providers of services) have been in use for information management purposes. An exemplary one of such servers is a Lightweight Directory Access Protocol (LDAP) server, for use in management of address information which belongs to, for example, employees' individual information, customers' individual information, inhabitants' individual information, etc.

In this configuration, persons and/or organizations/associations (i.e., entities) are arranged in a hierarchical tree structure, and a plurality of sets of persons' individual information are stored in a database as a plurality of sets of entry information.

In a typical server/client network environment, clients (i.e., online requestors of services) are used in combination with such servers. An exemplary client is configured to be communicatable with LDAP servers, which may be in the form of a multi-function peripheral.

In an exemplary one of such an environment, between a multi-function peripheral and an LDAP server, interactive communications including various requests and responses are continued in a manner that, upon reception of a "search" request from a user through the multi-function peripheral, the LDAP server sends a "search result" to the multi-function peripheral, as a response to the "search" request.

The above-described function achieved by the exemplary environment permits the multi-function peripheral to send to the LDAP server a "search" request for the desired entry information, and then receive a search result from the LDAP server.

For an.exemplary conventional approach of such techniques, Japanese Patent Application Publication No.2004-274486 is referenced.

### BRIEF SUMMARY OF THE INVENTION

Conventionally, a user, when wishes to retrieve the desired entry information (e.g., address information) from the database of the LDAP server which has stored therein a plurality of sets of entry information in a multi-level hierarchical directory structure, is inevitably required to specify, via a user action, one of a plurality of directory levels which the user finds relevant for retrieving the desired entry information.

For specifying the relevant directory level, the user is conventionally forced to enter information into the multi-function peripheral, via a user action, in a given or inflexible format, causing the user action to be laborious or troublesome.

In addition, an alternative approach is proposed in which the multi-function peripheral conducts a search in default settings allowing the multi-function peripheral to retrieve from the database all the sets of entry information located at all the levels in the database.

In this instance, however, the user is required to select the desired entry information from a vast amount of information retrieved by the multi-function peripheral, causing the user action to be laborious or troublesome, similarly with the foregoing exemplary conventional approach.

It would be desirable to remove or eliminate labor or work required for a user to conduct a search on a hierarchical directory structure for the desired address or entry information.

It is therefore an object of the invention to provide techniques of promoting a user to select one of directory levels which is referenced for retrieving the desired address information, with greater ease.

### General Overview of the Invention

According to a first aspect of the invention, there is provided an apparatus for searching a hierarchical directory structure for desired address information. The hierarchical directory structure is stored in and managed by an information management device in a manner that a plurality of directories are arranged in a multi-level hierarchical structure in association with a plurality of sets of address information.

The apparatus comprises:
a directory retriever searching the information management device using at least one user-entered keyword as a search term, to thereby retrieve at least one of the plurality of directories which at least partially matches the keyword, as at least one associated directory; and
an address information retriever searching the information management device using the at least one associated directory, to thereby retrieve a sub-plurality of the plurality of sets of address information as a plurality of sets of candidate address information, the plurality of sets of candidate address information being associated with at least one subordinate one of the plurality of directories, the at least one subordinate directory being located at one or more lower levels than that of the at least one associated directory in the hierarchical structure.

In this apparatus, the address information retriever further accesses at least one arbitrary one of the plurality of sets of candidate address information as at least one set of output address information.

In this apparatus, one or more associated directories are retrieved from the hierarchical directory structure, in response to a user-entered keyword. Following that, a search is conducted on the hierarchical directory structure for a plurality of sets of address information associated with at least one subordinate one of the plurality of directories. The at lest one subordinate directory is located at one or more lower levels than that of the one or more associated directories stored in the hierarchical directory structure.

Owing to this configuration, in response to a user request for retrieval of the desired address information from the hierarchical directory structure, a search is conducted not on all sets of address information stored in the hierarchical directory structure, but on fewer ones of the sets of address information, for retrieval of the desired address information.

In this regard, the fewer sets of address information are located at one or more lower levels than the one or more associated directories.

Therefore, the user is not required to conduct a search on the hierarchical directory structure beginning at a topmost one of multi levels of the hierarchical directory structure, for retrieval of the desired address information.

As a result, this apparatus would make it easier for the user to locate the desired address information within even a large number of sets of data which are arranged at multi levels and which are stored in the hierarchical directory structure.

Additionally, this apparatus allows the user to locate a particular directory so as to satisfy a user intent, using a keyword entered by the user as a search term in a flexible or arbitrary format. This does not require the user to enter search information in a given or compulsory format.

Therefore, this apparatus would make it easier for the user to identify a particular directory for use in ultimately retrieving desired address information from the hierarchical directory structure.

Throughout the specification, the term "address information" may be used to mean, for example, not only telephone numbers and/or facsimile numbers, but also additional information associated with the directories (e.g., company's information, organization's information, etc.).

Additionally, the phrase "at least one of the plurality of directories which at least partially matches the keyword" may mean that primary information of the at least one directory includes the keyword, or that auxiliary information of the at least one directory includes the keyword. An example of the primary information is the name of the at least one directory, while an example of the auxiliary information is information which has been attached to the directory name.

According to a second aspect of the invention, there is provided a method of searching a hierarchical directory structure for desired address information. The hierarchical directory structure is stored in and managed by an information management device in a manner that a plurality of directories are arranged in a multi-level hierarchical structure in association with a plurality of sets of address information.

This method comprises the steps of:
searching the information management device using at least one user-entered keyword as a search term, to thereby retrieve at least one of the plurality of directories which at least partially matches the keyword, as at least one associated directory;
searching the information management device using the at least one associated directory, to thereby retrieve a sub-plurality of the plurality of sets of address information as a plurality of sets of candidate address information, the plurality of sets of candidate address information being associated with at least one subordinate one of the plurality of directories, the at least one subordinate directory being located at one or more lower levels than that of the at least one associated directory in the hierarchical structure; and
accessing at least one arbitrary one of the plurality of sets of candidate address information as at least one set of output address information.

According to a third aspect of the invention, a computer readable medium which has stored therein a computer executable program which, when executed, implements the method according to the second aspect of the invention.

In this regard, the "medium" may be realized in different types including a magnetic recording medium such as a flexible-disc, an optical recording medium such as a CD and a CD-ROM, an optical-magnetic recording medium such as an MO, a removable storage, an un-removable storage such as a ROM, etc.

Once the computer executable program described above has been installed in any computer, the same functions as those provided by the apparatus according to the first aspect of the invention and the method according to the second aspect of the invention are provided.

### Illustrative Embodiments of the Invention

According to the invention, the following modes are provided as the illustrative embodiments of the invention.

According to a first mode of the invention, the apparatus according to the above-described first aspect of the invention further comprises:
an address information retrieving device including the directory retriever and the address information retriever, the address information retrieving device being communicatable with the information management device; and
a user-operable controller accepting an user entry and supplying the accepted user entry to the address information retrieving device.

In this regard, the user-operable controller and the address information retrieving device may be configured unitarily or separately from each other. In a separate configuration, a preferable example of the user-operable controller is in the form of a personal computer combining an outperformed input device such as a keyboard and an outperformed presentation device such as a display (e.g., a Flat Panel Display such as a Liquid Crystal Display or a Plasma Display, or a Cathode Ray Tube).

The preferable example of the user-operable controller would allow a user to specify for storage at least one associated directory with greater ease, even when the address information retrieving device is configured to allow a user to enter information solely via a control panel limited in control flexibility. An example of such an address information retrieving device is a multi-function peripheral configured to include multi functions such as a printer, a scanner, a facsimile machine, etc., in one physical body.

In an example of this first mode, the user-operable controller includes a mobile terminal having a screen for display of information, the mobile terminal being communicatable with the address information retrieving device via a wireless communication network.

According to a second mode of the invention, the apparatus according to the first aspect of the invention further comprises:
a storing section storing identification information for identifying the at least one associated directory that was retrieved by the directory retriever, in a storage; and
an output device outputting the at least one set of address information that was accessed by the address information retriever.

In this second mode, the storage may be located at any one of the user-operable controller and the address information retrieving device, and the storage may be located at at least one instrumentality over a communications network when the user-operable controller and the address information retrieving device are configured to be communicatable with each other via the network.

However, more practically, the storage is preferably located at the address information retrieving device, because this allows the address information retrieving device to directly store the identification information to be used for identifying at least one associated directory which will be referenced by the address information retrieving device during a requested search.

In this second mode, the address information retriever retrieves a sub-plurality of the plurality of sets of address information as the plurality of sets of candidate address information. The plurality of sets of candidate address information are associated with at least one subordinate one of the plurality of directories. The at least one subordinate directory is located at one or more lower levels than that of the at least one associated directory in the hierarchical structure. The at least one associated directory is identified by the identification information stored in the storage.

According to a third mode of the invention, the apparatus according to the first aspect of the invention further comprises:
a first display controller performing, in the presence of a plurality of associated directories retrieved by the directory retriever, a process for allowing the plurality of retrieved associated directories to be displayed; and
a selector selecting, in accordance with a user instruction, one of the plurality of displayed associated directories as one specific directory.

In this third mode, the address information retriever retrieves a sub-plurality of the plurality of sets of address information as the plurality of sets of candidate address information. The plurality of sets of candidate address information are associated with at least one subordinate one of the plurality of directories. The at least one subordinate directory is located at one or more lower levels than that of the selected one specific directory in the hierarchical structure.

In this third mode, when the search leads to the detection of a plurality of associated directories which at least partially match a keyword entered by a user as a search term or a search parameter, the user is allowed to identify one of the associated directories as a particular or specific directory, simply by selecting one of the associated directories.

Therefore, even in the presence of a plurality of associated directories, the user is allowed to identify a single particular directory with greater ease.

In a first example of this third mode, the first display controller performs a process for allowing a list of the plurality of retrieved associated directories to be displayed.

According to a fourth mode of the invention, the apparatus according to the first aspect of the invention further comprises a second display controller performing a process for allowing at least one associated directory retrieved by the directory retriever to be displayed together and in association with directory information owned by at least one superior director of the plurality of directories. The at least one superior directory is located at one or more higher levels than that of the at least one associated directory.

In this fourth mode, the list of the plurality of associated directories, if any, is displayed together with directory information (e.g., hierarchy-related information, level-to-level relationships) owned by superior ones of the plurality of directories. The superior directories are located at one or more higher levels than that of each associated directory.

As a result, the visual presentation of the directory information allows the user to understand a hierarchical location of each associated directory relative to adjacent directories located above each associated directory, promoting the user to determine at which level each associated directory is located and at which position each associated directory is located on the same level.

Therefore, the user is allowed to identify a single particular directory with further greater ease.

In a second example of the third mode of the invention, the apparatus according to the third mode further comprises a second display controller performing a process for allowing the plurality of associated directories retrieved by the directory retriever to be displayed together and in association with directory information owned by at least one superior director of the plurality of directories. The at least one superior directory is located at one or more higher levels than that of each of the plurality of retrieved associated directories.

According to a fifth mode of the invention, the address information handled in the first aspect of the invention includes destination information for use in identifying a destination to which data is to be transmitted.

In this fifth mode, the apparatus according to the first aspect of the invention further comprises a data transmission controller performing a process for the data to be transmitted to the destination identified by the destination information within the address information retrieved by the address information retriever.

In this fifth mode, the user is allowed to retrieve a particular set of address information for use in a data transmission, from a plurality of sets of address information associated with subordinate directories. The subordinate directories are located at lower levels than that of a particular directory which has been identified via a simplified user-action.

According to a sixth mode of the invention, the at least one associated directory used in the apparatus according to the first aspect of the invention includes a root directory at which a continued process of a search begins. Further, in this sixth mode, the address information retriever used in the apparatus according to the first aspect of the invention includes: a counter counting a number of the plurality of sets of candidate address information; and an access section accessing from the plurality of sets of candidate address information, at least one set of candidate address information having its total number identical to a user-designated number, as the at least one set of address information.

In a first example of the sixth mode, the access section includes a sequential access unit repeatedly accessing the at least one set of address information from the plurality of sets of candidate address information, one by one, in the same sequence as that in which the plurality of sets of candidate address information are arranged in the hierarchical structure.

In a second example of the sixth mode, the access section includes a random access unit repeatedly accessing the at least one set of address information from the plurality of sets of candidate address information, one by one, in a random sequence.

In a third example of the sixth mode, the access section includes: a sequential access unit repeatedly accessing the at least one set of address information from the plurality of sets of candidate address information, one by one, in the same sequence as that in which the plurality of sets of candidate address information are arranged in the hierarchical structure; a random access unit repeatedly accessing the at least one set of address information from the plurality of sets of candidate address information, one by one, in a random sequence; and an access unit selector selecting, in accordance with a user instruction, one of the sequential access unit and the random access unit.

According to a seventh mode of the invention, the information management device used in the apparatus according to the first aspect of the invention includes an LDAP server, and the apparatus according to the first aspect is communicatable with the LDAP server via a wired or wireless network.

In an example of the seventh mode, the network is a WAN or a LAN.

### BRIEF DESCRIPTION OF THE SEVERAL VIEWS OF THE DRAWINGS

The foregoing summary, as well as the following detailed description of preferred embodiments of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown. In the drawings:
Fig.1 is a schematic view illustrating an exemplary data transmission system constructed according to an embodiment of the invention;
Fig.2 is a block diagram illustrating an exemplary electrical configuration of a multi-function peripheral depicted in Fig.1;
Fig.3 is a plan view illustrating a control panel of the multi-function peripheral depicted in Fig.1;
Fig.4 is a block diagram illustrating an exemplary electrical configuration of a directory server depicted in Fig.1;
Fig.5 is a schematic view of an exemplary tree structure employed in the directory server depicted in Fig.1;
Fig.6 is a view illustrating an exemplary set of entry information in the directory server depicted in Fig.1;
Fig.7 is a block diagram illustrating an exemplary electrical configuration of a user terminal depicted in Fig.1;
Fig.8 is a view illustrating an exemplary screen page for prompting a user to set conditions for communication connections with the directory server depicted in Fig.1;
Fig.9 is a flow chart conceptually illustrating an exemplary process for a directory search which is executed by the multi-function peripheral depicted in Fig.1;
Fig. 10 is a view illustrating an exemplary screen page on which there is displayed a list of results of the directory search provided by execution of the process illustrated in Fig.9;
Fig. 11A is a flow chart illustrating an exemplary process for a communication-connection check which is executed by the multi-function peripheral depicted in Fig.1;
Fig. 11B is a flow chart that illustrates a continuation of the flow chart of Fig.11A;
Fig. 12A is a flow chart illustrating an exemplary process for entry access which is executed by the multi-function peripheral depicted in Fig.1;
Fig. 12B is a flow chart that illustrates a continuation of the flow chart of Fig. 12A;
Fig.13 is a view conceptually illustrating a process for accessing a plurality of sets of entry information;
Fig.14A is a flow chart illustrating an exemplary process for communication-connection-check-result display which is executed by the multi-function peripheral depicted in Fig.1;
Fig.14B is a flow chart that illustrates a continuation of the flow chart of Fig.14A;
Fig.15 is a view illustrating an exemplary screen page on which a result of communication-connection-check is displayed under the control of the multi-function peripheral depicted in Fig.1;
Fig.16 is a view illustrating another exemplary screen page on which a result of communication-connection-check is displayed under the control of the multi-function peripheral depicted in Fig.1;
Fig.17 is a view illustrating still another exemplary screen page on which a result of communication-connection-check is displayed under the control of the multi-function peripheral depicted in Fig. 1;
Fig.18-is a flow chart illustrating an exemplary process for a data transmission which is executed by the multi-function peripheral depicted in Fig.1; and
Fig.19 is a flow chart illustrating an exemplary process for an address-book search which is executed by the multi-function peripheral depicted in Fig.1.

### DETAILED DESCRIPTION OF THE INVENTION

Several presently preferred embodiments of the invention will be described in more detail by reference to the drawings in which like numerals are used to indicate like elements throughout.

### 1. GENERAL OVERVIEW OF HARDWARE CONFIGURATION

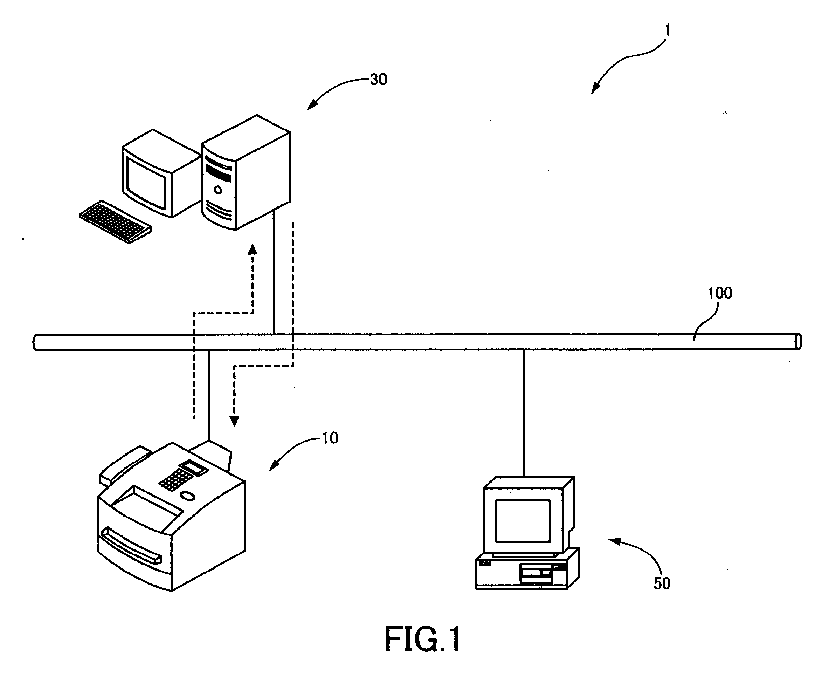

Referring first to Fig. 1, there is schematically illustrated an exemplary address information search system 1 constructed in accordance with an embodiment of the present invention.

In the address information search system 1 depicted in Fig. 1, a multi-function peripheral 10 is coupled to a directory server (e. g. , a Lightweight Directory Access Protocol (LDAP) server) 30 and a terminal (i.e., a user terminal) 50 via a wired communications network 100.

The multi-function peripheral 10 is an example of an address information retrieving device. The directory server 30 is an example of an information management device which has stored therein a plurality of sets of entry information (including address information) including information of destinations for a transmission (hereinafter, referred to as "transmission destination information").

As will be described in greater detail below, in the directory server 30, a plurality of sets of entry information (hereinafter, also referred to simply as "entries") including a plurality of sets of transmission destination information have been stored, such that these sets of entry information are logically arranged in a hierarchical tree structure.

The terminal 50 is an example of a user-operable controller for allowing a user to control or set the conditions of the multi-function peripheral 10, etc.

For the wired communications network 100, serial communication cables, parallel communication cables, wired Local Area Network (LAN) cables, etc. are available. In the present embodiment, the wired LAN cables are employed for constructing the wired communications network 100.

Alternative to the terminal 50, an easy-to-carry mobile terminal may be coupled to the multi-function peripheral 10 via a wireless communications network. For the wireless communications network, wireless LAN technologies, IEEE 802.11x standards, Bluetooth (registered trademark) technologies, etc. are available.

### 1.1. MULTI-FUNCTION PERIPHERAL

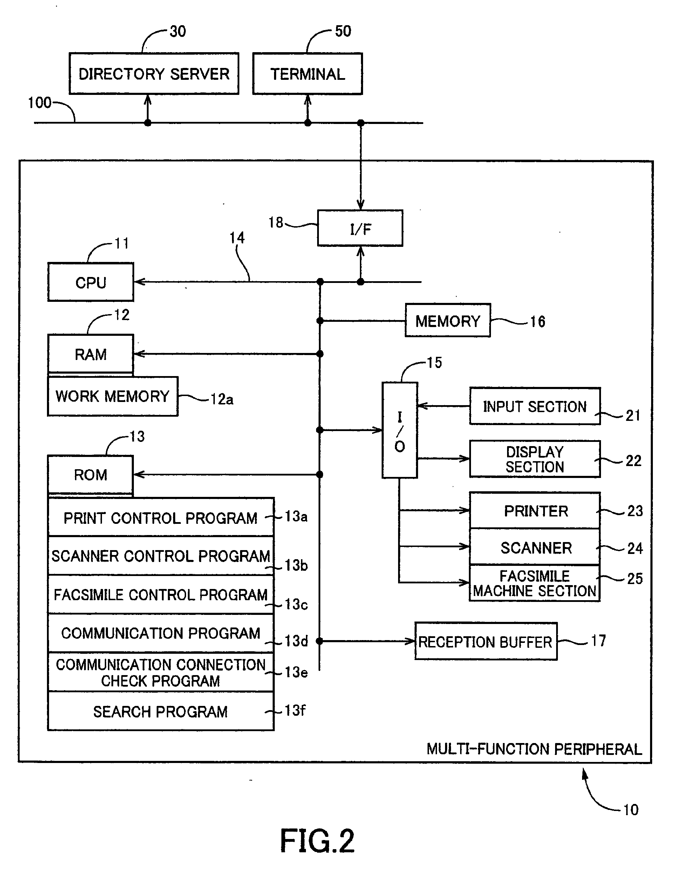

Referring next to Fig. 2, there is illustrated in block diagram an electrical configuration of the multi-function peripheral 10. The multi-function peripheral 10 is configured to perform various functions including a facsimile transmission, an e-mail message transmission, a printer, a scanner, a copier, etc., in a single physical body.

To this end, the multi-function peripheral 10 is constructed to include: a Central Processing Unit (CPU) 11; a Random Access Memory (RAM) 12 including a work memory 12a; a Read Only Memory (ROM) 13 storing therein various programs; bus lines 14; an input/output device 15 (denoted as "I/O" in Fig. 2); and a memory 16 in the form of a non-volatile memory (e. g., an Electrically Erasable Programmable Read Only Memory (EEPROM)).

The multi-function peripheral 10 further includes a communications interface 18 (denoted as "I/F" in Fig. 2) which is coupled to the wired communications network 100, and through which data or the like is transmitted to and received from the directory server 30 and the terminal 50.

The multi-function peripheral 10 still further includes a reception buffer memory 17 (hereinafter, also referred to as "reception buffer") for temporary storage of print-control data received from the external.

To the input/output device 15, there are coupled an input section 21 composed of a touch-sensitive panel, pushbutton switches, a numeric keypad, etc.; a display section 22 in the form of such as a Liquid Crystal Display (LCD); and a printer 23 in the form of such as an inkjet printer, a laser printer, a thermal-transfer printer, a dot-impact-type printer or the like, all of which are well-known in the art.

It is added that the communications interface 18, which is an example of a wired communications interface, is coupled to the wired communications network 100.

The ROM 13 has stored therein: a print control program 13a; a scanner control program 13b; a facsimile control program 13c; a communication program 13d; a communication connection check program 13e; and a search program 13f.

The memory 16 within the multi-function peripheral 10 is used to store: (a) a telephone book in which person names, company names, etc. are associated with a plurality of sets of transmission destination information such as telephone numbers and/or e-mail addresses; and (b) search terms or search parameters to be used for conducting a search on the directory server 30 for desired entry information.

Upon properly manipulating the input section 21 of the multi-function peripheral 10, a user is allowed to conduct a search for retrieval of a desired telephone number and/or a desired e-mail address, with the capabilities of a facsimile transmission to a particular destination having the retrieved telephone number, and/or an Internet-based facsimile transmission to a particular destination having the retrieved e-mail address, via an available network.

In the memory 16, a plurality of sets of transmission destination information have been stored in association with respective single-touch dialing buttons 21b and respective numbers used in a quick dialing mode, as described below.

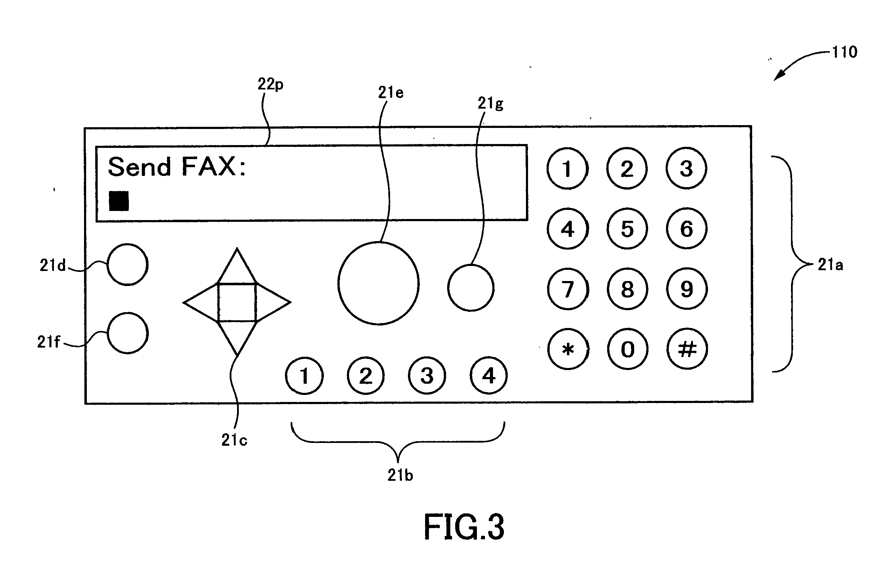

Referring next to Fig. 3, there is illustrated an exemplary control panel 110 which defines the input section 21 and the display section 22 of the multi-function peripheral 10.

In the control panel 110, the display section 22 is comprised of a display panel 22p, while the input section 21 is comprised of a combination of input buttons 21a, the single-touch dialing buttons 21b, a selection button 21c, an entry button 21d, a transmission button 21e, etc.

The input buttons 21a allow the user to enter a desired telephone number or the like. In addition, upon depressing a conversion button (not shown), the user can enter information in alphabetical characters via the input buttons 21, with the capability of the user entering, via the input buttons 21, an e-mail address for the desired e-mail message transmission; a keyword for use in a search for the desired transmission destination information stored in the memory 16 or the directory server 30; or the like.

As described above, the control panel 110 includes the single-touch dialing buttons 21b in the form of, for example, pushbuttons numbered or marked "1" through "4."

More specifically, the single-touch dialing buttons 21b allow various sets of information including telephone numbers, facsimile numbers, e-mail addresses, folder names, etc., to be stored in association with the numbers "1" through "4" of the single-touch dialing buttons 21b.

Still more specifically, the single-touch dialing buttons 21b enable the user to select information corresponding to the desired number, simply by selecting one of the single-touch dialing buttons 21b which corresponds to the desired number. That is to say, only a single depressing of a selected one of the single-touch dialing buttons 21b enables the user to send data or information to the specified destination.

Further, the control panel 110 also includes a designation button 21f for allowing the user to instruct the multi-function peripheral 10 to enable the quick dialing mode. The quick dialing mode is enabled by a combination of a user entry of the desired number and a user action on the designation button 21f.

The quick dialing mode allows various sets of information including telephone numbers, facsimile numbers, e-mail addresses, etc., to be stored in association with numbers "10" through "99," for example. The quick dialing mode enables the user to select a particular set of information corresponding to the desired number, simply by designating the desired number and depressing the designation button 21f.

Additionally, the control panel 110 sill also includes a search button 21g. The search button 21g allows the user to conduct a search for the desired transmission destination information using a keyword or the like.

Upon depressing the search button 21g and entering a person name or the like related to transmission destination information to be retrieved, the user can retrieve the desired transmission destination information from a plurality of sets of entry information or alternatively from the telephone book.

The plurality of sets of entry information have been stored in a data base 34c accommodated within a Hard Disc Drive (HDD) 34 of the directory server 30, while the telephone book has been stored in the memory 16 of the multi-function peripheral 10.

Further, the display panel 22p is for use in displaying a number or the like specified by the user via the input buttons 21a or the like, in a conventional display technique used in such as an LCD. The selection button 21c and the enter button 21d allow the user to select one of items included in a menu displayed on the display panel 22p, and the transmit button 21e allows the user to instruct the multi-function peripheral 10 to transmit information to the desired destination.

In the present embodiment, the address information retrieving device is in the form of a so-called all-in-one device or the multi-function peripheral 10, in which, the printer 23; a scanner 24 for use in copying and capturing images; and a facsimile machine section 25 are coupled to the input/output device 15 for being controlled.

The printer 23, the scanner 24 and the facsimile machine section 25 are each operated in a manner well-known in the art, under the control of the CPU 11 executing the aforementioned control programs 13a, 13b and 13c stored in the ROM 13, using the work memory 12a of the RAM 12.

Further, the multi-function peripheral 10 is configured to include an e-mail message transmission/reception function to allow e-mail messages in which print-image data has been embedded, to be transmitted and received via an external communications network coupled to the wired communications network 100. The e-mail message transmission/reception function is achieved by execution of a program, which is well-known in the art, and which has been incorporated in the aforementioned communication program 13d stored in the ROM 13.

The aforementioned communication connection check program 13e is for use in checking the capability of the multi-function peripheral 10 retrieving or accessing desired destination information from the directory server 30. On the other hand, the aforementioned search program 13f is for use in retrieving or accessing desired destination information from the directory server 30, for enabling the multi-function peripheral 10 to transmit data to a desired destination.

### 1.2. DIRECTORY SERVER

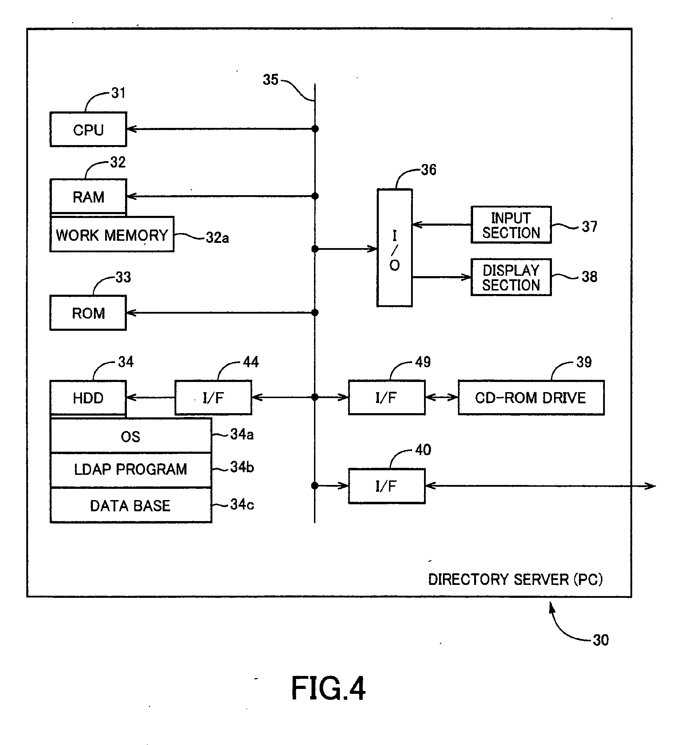

Referring next to Fig. 4, there is illustrated in block diagram an electrical configuration of the directory server 30.

The directory server 30 is in the form of a personal computer (PC) or a workstation, which include: a Central Processing Unit (CPU) 31; a Random Access Memory (RAM) 32 including a work memory 32a; a Read Only Memory (ROM) 33 storing therein various programs; a Hard Disk Drive (HDD) 34 as a storage device; bus lines 35; an input/output device 36 (denoted as "I/O" in Fig. 4); a CD-ROM drive 39; and a communications interface (denoted as "I/F" in Fig. 4) 40 which is coupled to the wired communications network 100 (see Fig. 1), and through which data such as print control data is transmitted and received.

To the bus lines 35, the HDD 34 and the CD-ROM drive 39 are coupled via interfaces 44 and 49, respectively. The HDD 34 has stored therein an Operating System (OS) 34a which is a software platform of the directory server 30; an LDAP program 34b executed for the directory server 30 to successfully function as an LDAP server; a database 34c storing a plurality of sets of entry information; etc.

On the other hand, to the input/output device 36, an input section 37 in the form of a keyboard or a mouse, and a display section 38 in the form of an LCD or a CRT are coupled.

In the present embodiment, the directory server 30, which is constructed as an LDAP server providing users with accesses to the LDAP server in a Lightweight Directory Access Protocol (LDAP), includes the database 34c having stored therein a plurality of sets of entry information including a plurality of sets of transmission destination information.

More specifically, the database 34c has stored therein a plurality of sets of entry information including various sets of person name information and various sets of address information associated with respective sets of person names. Each set of address information may indicate affiliation of persons, telephone numbers, facsimile numbers, e-mail addresses, etc.

In the directory server 30, a plurality of persons and organizations are arranged in a hierarchical tree structure, and a plurality of sets of persons' individual information have been stored in the database 34c as a plurality of sets of individual entry information.

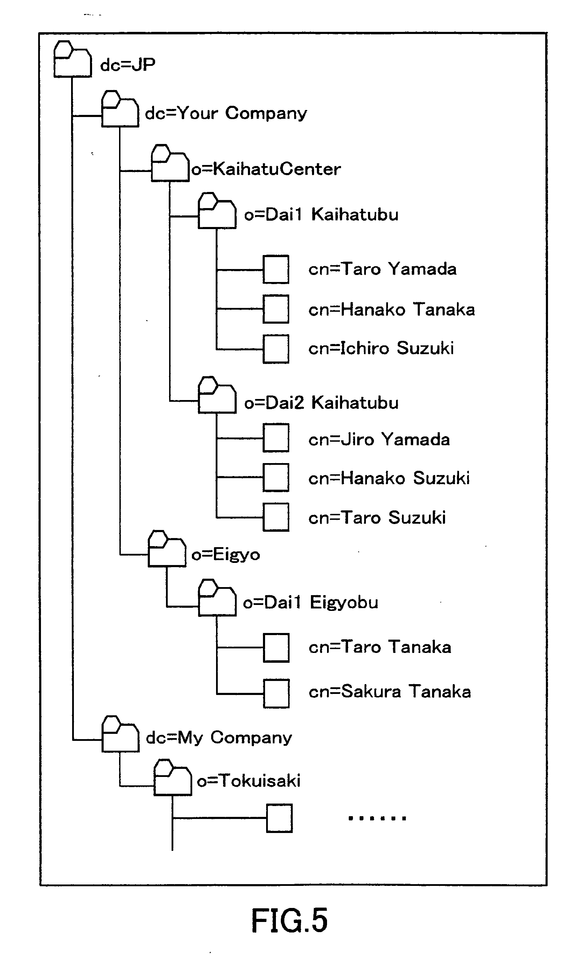

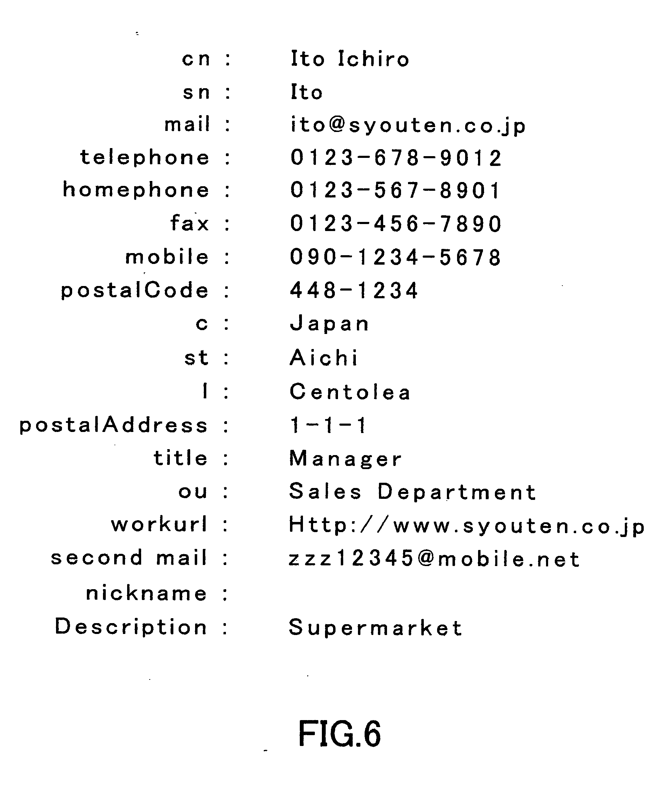

Fig. 5 illustrates an exemplary hierarchical tree structure into which a plurality of directories or units have been organized in the directory server 30, while Fig. 6 illustrates an exemplary set of entry information which includes a plurality of attributes such as "c (country)," "ou (organization unit)," "cn (full name of person)," "sn (surname of person)," "mail (e-mail address)," "telephone (telephone number)," and "fax (facsimile number)."

The attributes of the plurality of sets of entry information are not limited to those exemplified in Fig. 6. The term "entry information of each directory" may be defined to also mean directory information including a type of entry information indicative of linkage relationships between directories belonging to a common hierarchical tree structure. By this definition, a plurality of sets of entry information associated with a plurality of directories are also arranged in a hierarchical structure accordingly.

Between the directory server 30 and an LDAP client in the form of the multi-function peripheral 10, interactive communications including various requests and responses are continued in a manner that, upon reception of a request for a "search" from the multi-function peripheral 10, the directory server 30 sends a "search result" to the multi-function peripheral 10, as a response to the "search" request.

The above-described function permits the multi-function peripheral 10 to send to the directory server 30 a request for a search for desired entry information including transmission destination information (e.g., a facsimile number and/or e-mail address of a transmission destination), then receive a search result from the directory server 30, and transmit information to the transmission destination via facsimile, Internet facsimile or e-mail.

### 1.3. TERMINAL

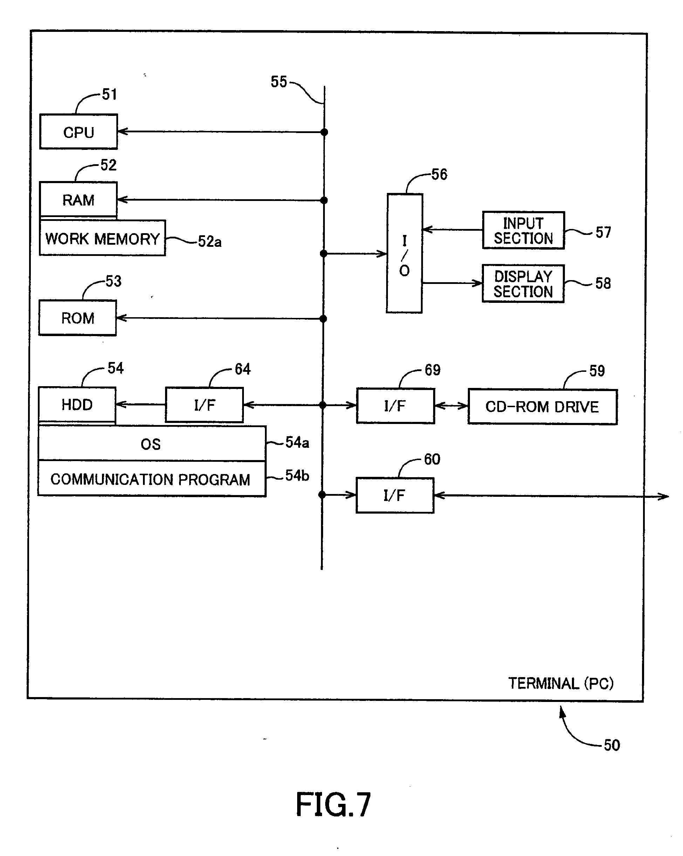

Referring next to Fig. 7, there is illustrated in block diagram an electrical configuration of the terminal 50.

The terminal 50 is in the form of a personal computer (PC) or a workstation, which include: a Central Processing Unit (CPU) 51; a Random Access Memory (RAM) 52 including a work memory 52a; a Read Only Memory (ROM) 53 storing therein various programs; a Hard Disk Drive (HDD) 54 as a storage device; bus lines 55; an input/output device 56 (denoted as "I/O" in Fig. 7); a CD-ROM drive 59; and a communications interface (denoted as "I/F" in Fig. 7) 60 which is coupled to the wired communications network 100 (see Fig. 1), and through data such as print control data is transmitted and received.

To the bus lines 55, the HDD 54 and the CD-ROM drive 59 are coupled via interfaces 64 and 69, respectively. In the HDD 54, there have been installed an Operating System (OS) 54a which is a software platform of the terminal 50; a communication program 54b executed for instructing the multi-function peripheral 10 to control or set the conditions for communication connection between the multi-function peripheral 10 and the directory server 30, with the terminal 50 and the multi-function peripheral 10 being communicated with each other; etc.

On the other hand, to the input/output device 56, an input section 57 in the form of a keyboard or a mouse, and a display section 58 in the form of an LCD or a CRT are coupled.

The terminal 50, which is communicatable with the wired communications network 100, as described above, allows a user to control, via manipulating the terminal 50, the multi-function peripheral 10 which is communicatable with the wired communications network 100 similarly with the terminal 50.

For the communication program 54b to be installed in the HDD 54 of the terminal 50, the communication program 54b, when being distributed via recording media such as CD-ROMs each containing the communication program 54b, may be accessed from a corresponding one of the recording media via the CD-ROM drive 59, or may be downloaded from a certain site over the wired communications network 100.

In the present embodiment, the execution at the terminal 50 of the communication program 54b stored in the HDD 54 establishes a communication connection from the terminal 50 to the multi-function peripheral 10, and the execution at the multi-function peripheral 10 of the communication connection check program 13e in response to instructions from the terminal 50 permits a check of a communication connection from the multi-function peripheral 10 to the directory server 30.

There will be described below the flow of a communication connection check process effected by execution of the communication connection check program 13e.

### 2. GENERAL OVERVIEW OF SOFTWARE OPERATIONS

In the present embodiment, a directory entry process is effected for a search on the directory server 30 for retrieving a particular directory (e.g., a root directory). The retrieved particular directory is entered into a suitable memory location for storage for later uses.

Subsequently, a data transmission process including an address-book search process is effected for transmitting information to a destination using desired address information. The address-book search process is effected for a search on the directory server 30 for retrieving desired address information using the retrieved particular directory (e.g., a root directory).

The directory retrieval process will be outlined below.

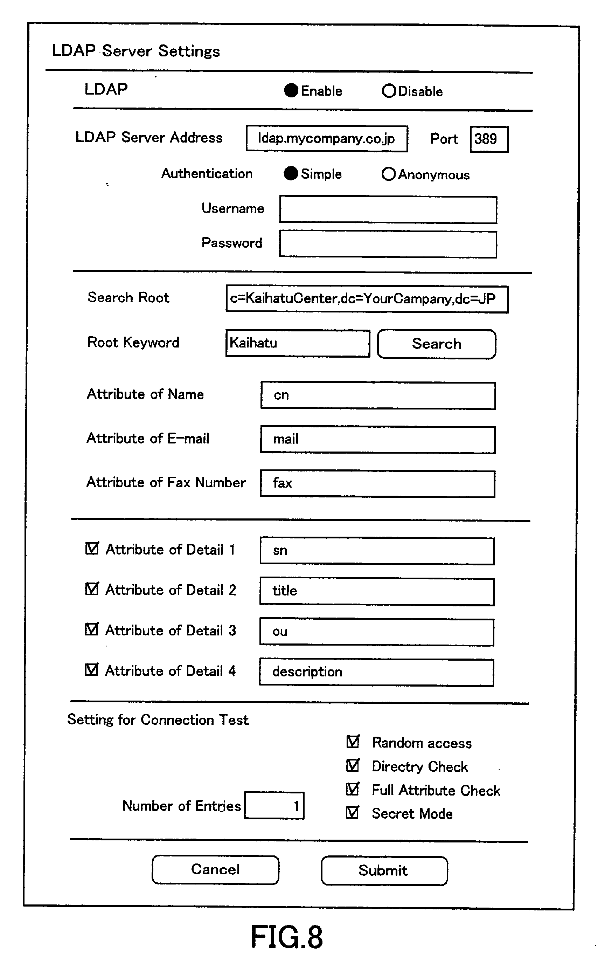

Referring now to Fig. 8, there is illustrated a communication connection setting screen-page which is labeled as "LDAP Server Settings" in Fig. 8.

The communication connection setting screen-page (hereinafter, abbreviated as "setting screen-page") is provided by the multi-function peripheral 10 to the terminal 50 for prompting a user to set, via manipulating the terminal 50, the conditions for the communication connection between the multi-function peripheral 10 and the directory server 30. The terminal 50 allows the user to perform remote control of the multi-function peripheral 10.

Upon a user manipulation on the terminal 50, the terminal 50 is connected to the multi-function peripheral 10 which in turn causes the terminal 50 to display the setting screen-page on a display screen of the display section 58. For the setting screen-page to be displayed, the communication connection check program 13e stored in the ROM 13 of the multi-function peripheral 10 is executed by the CPU 11.

On the setting screen-page, various items and buttons are displayed.

The items include a "LDAP Server Address" item, a "Search Root" item, a "Root Keyword" item, "Attribute of Detail 1-4" items (including four check boxes), a "Setting for Connection Test" item (including four check boxes), a "Number of Entries" item, etc. The buttons include a "Search" button, a "Cancel" button and a "Submit" button.

At the "LDAP Server Address," the user is allowed to designate an LDAP server currently used by the multi-function peripheral 10, which is to say, the directory server 30, in the present embodiment.

At the "Search Root," the user is allowed to designate a particular one of a plurality of directories together forming a tree structure, which will be referenced during the following search on the directory server 30. The designation is performed for ultimately specifying a root directory.

For a particular directory to be designated at the "Search Root," the user is capable of directly entering a string representative of the particular directory, and is also capable of entering a keyword into a "Root Keyword" which is useful for specifying the particular directory through a keyword search.

For a direct entry into the "Search Root," the user is required to enter a string in a predefined format, such as illustrated in Fig. 8. The format required by the directory server 30, which is to say, an LDAP server, in the present embodiment, may be a standardized string notation of distinguished names.

In contrast, for an entry using the "Root Keyword," the user is allowed to enter a keyword (e.g., a part of the name of the desired directory) which at least partially matches the name of a directory to be designated. Upon entry of such a keyword, a search is conducted on the directory server 30 for a match of the entered keyword, resulting in retrieval of a matched directory.

The matched directory is entered into the "Search Root" as a particular directory to be designated at the "Search Root," without requiring the user to enter the name of a particular directory into the "Search Root" in the required format.

Then, the directory retrieval process ends, and the communication connection check process follows.

The communication connection check process will be outlined below.

At the "Attribute of Detail, " the user is capable of designating which attribute values (e.g., items or types of attribute) of eventually retrieved information will be visualized or displayed after a search leads to successful retrieval of a particular set of information from the directory server 30. As a result, the retrieved information will be displayed only with respect to its designated attribute values, as a search result, via the display section 58.

At the "Setting for Connection Test," the user is allowed to designate the conditions for the communication connection check process. The "Setting for Connection Test" item includes four options, a "Random access" option, a "Directory Search" option, a "Full Attribute Check" option, and a "Secret Mode" option.

Upon selecting the "Random access" option, the user is allowed to access a plurality of sets of entry information randomly from the directory server 30.

Upon selecting the "Directory Check" option, the user is allowed to view a plurality of sets of entry information accessed from the directory server 30, together with the identity of a time-changing directory which is referenced as a root directory, on a directory-by-directory basis.

More specifically, selection of the "Directory Check" option permits the user to visually check, at a first time, a first group of sets of entry information accessed from the directory server 30 under a first root directory, and check, at a second time, a second group of sets of entry information accessed from the directory server 30 under a second root directory.

If the "Full Attribute Check" option has been selected by the user, then all the attributes of the desired entry information are displayed via the display section 58.

If the "Secret Mode" option has been selected by the user, then the desired entry information is displayed via the display section 58 in a secret mode allowing part of the desired entry information to be masked or invisible on a display screen.

Upon a combination of a precedent user designation of various conditions including such as search terms for the following communication connection check process and a subsequent user selection of the "Submit" button, both on the setting screen-page of Fig. 8, the communication connection check process starts.

### 2.1. DIRECTORY ENTRY PROCESS

The directory entry process is mainly divided into two sub-processes, a directory retrieval process and a communication connection check process.

### 2.1.1. DIRECTORY RETRIEVAL PROCESS

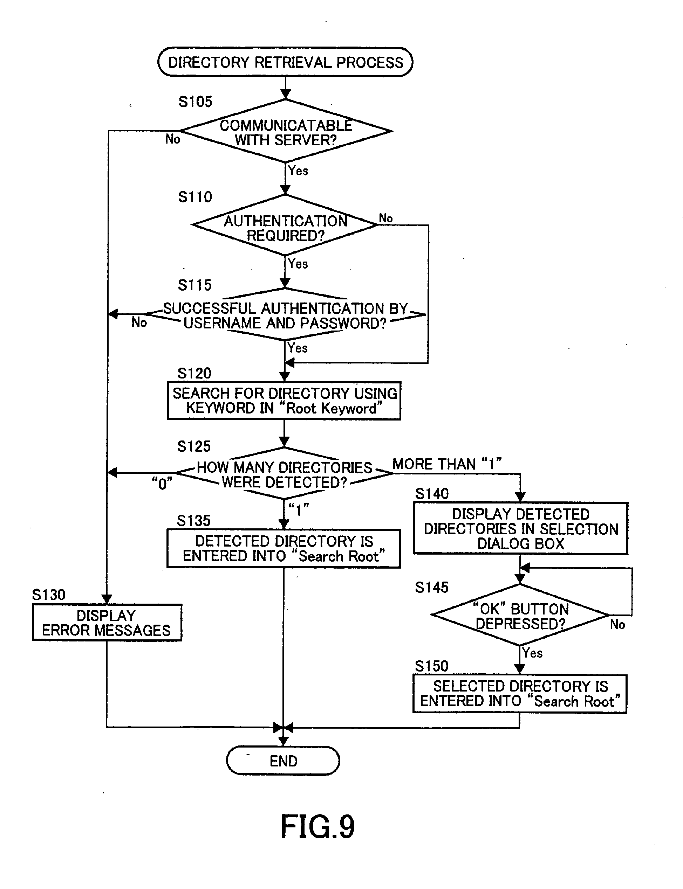

Referring next to Fig. 9, the directory retrieval process will be described below. This directory retrieval process starts in response to a user depressing action of the "Search" button after a user entry of a keyword into the "Root Keyword," both on the setting screen-page illustrated in Fig. 8.

Fig. 9 illustrates conceptually in flow chart a portion of the communication connection check program 13e which has been assigned to perform the directory retrieval process.

When the user depresses the "Search" button on the setting screen-page of Fig. 8, this directory retrieval process begins with step S105 in which the CPU 11 of the multi-function peripheral 10 attempts to access or connect to the directory server 30.

In the present embodiment, the identification information such as a network address (e.g., address: "ldap.mycompany.co.jp, port No.:389, in the example of Fig. 8) of the directory server 30 has been entered into the "LDAP Server Address" item of the setting screen-page of Fig. 8.

The identification information is also entered into a storage location of the work memory 12a or the memory 16. The storage location has been associated with the "LDAP Server Address" item on the setting screen-page of Fig. 8.

If the attempt to access the directory server 30 was unsuccessful ("No" branch of step S105), then an error message indicating that access to the directory server 30 was unsuccessful is presented to the user via the display section 58. for several seconds (step S130). Then, this directory retrieval process ends.

If, however, the attempt to access the directory server 30 was successful ("Yes" branch of step S105), then a determination is made as to whether or not the settings of the multi-function peripheral 10 require user authentication. If the user authentication is required ("Yes" branch of step S110), then a determination is made as to whether the current user was authenticated by a previously-entered user name and password (step S115).

If the user authentication was unsatisfied, which is to say, a currently-entered user name or password fails to match those previously entered ("No" branch of step S115), then an error message indicating that the user authentication was unsuccessful is presented to the user via the display section 58 (step S130). Then, this directory retrieval process ends.

If, however, at step S115, the user authentication was successful ("Yes" branch of step S115), or it was determined that the user authentication is not required ("No" branch of step S110), then, at step S120, a search is conducted for a directory which uses a keyword entered into the "Root Keyword."

More specifically, a search is conducted at the database 34c of the directory server 30 to which the multi-function peripheral 10 has been successfully connected, for the retrieval of the name of a directory including a keyword (e.g., "Kaihatu," in the example of Fig. 8).

If the search leads to successful detection of the name of a directory which at least partially matches the entered keyword, within the database 34c ("1" or "more than 1" branch of step S125), then the aforementioned directory information is also retrieved from the database 34c, in association with one or more higher levels than that of the matched directory in the hierarchical tree structure.

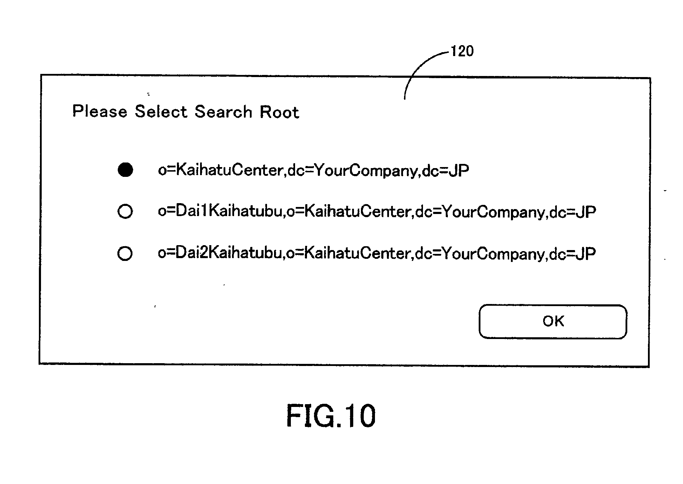

In the example of Fig. 10, there are three matched directories, all of which are presented to the user via the display section 58. For a topmost one of these three matched directories, its own name ("o=KaihatuCenter") is presented together with a combination of the name ("dc=Your Company") of a level immediately above the current level and the name ("dc=JP") of a level further above the current level.

In this example, "dc=YourCompany" and "dc=JP" are each directory information associated with the matched directory.

Therefore, in the present embodiment, such additional directory information is retrieved and presented concurrently with a matched directory, which helps the user in identifying the desired directory at the desired directory level, relative to or with reference to the adjacent superior directories.

Further, in the present embodiment, the concurrent retrieval of a matched directory and its additional directory information would make it unnecessary to retrieve the directory information again when a directory is ultimately entered into the "Search Root" item.

If the search leads to non detection of the name of a directory which at least partially matches the entered keyword, within the database 34c ("0" branch of step S125), then this directory retrieval process proceeds to step S130 to present an error message indicating that there is no matched directory. Then, this directory retrieval process ends.

In contrast, if the search leads to the detection of the name of only one directory which at least partially matches the entered keyword, within the database 34c ("1" branch of step S125), then the detected or matched directory (i.e., a single associated directory) is entered into the "Search Root" in Fig. 8, as a specified directory (step S135).

More specifically, the identifier of the associated directory is automatically entered into the "Search Root" item in a predefined format. In the example of Fig. 8, the identifier of the associated directory is "o=KaihatuCenter, dc=YourCompany, dc=JP."

Alternatively, if the search leads to the detection of the names of a plurality of directories each of which at least partially matches the entered keyword, within the database 34c ("more than 1" branch of step S125), then a selection dialog box 120 is presented to the user via the display section 58, which lists all the detected or matched directories (i.e., a plurality of associated directories), such as illustrated in Fig. 9 (step S140).

The selection dialog box 120 also indicates the information of directories located above each of the detected directories, concurrently with the information of each detected directory, for the reasons described above.

On the selection dialog box 120, the user selects one of a plurality of directories listed in the selection dialog box 120. In the example of Fig. 10, a topmost directory (i.e., "o=KaihatuCenter, dc=YourCompany, dc=JP") has been selected via a user clicking on a corresponding radio button.

If the user depresses an "OK" button on the selection dialog box 120 ("Yes" branch of step S145), then the selected directory is entered as a specified directory into the "Search Root" item (step S150).

In this embodiment, the detected directories are represented together with the information of additional directories located above the detected directories, which helps the user in locating a particular directory which belongs to the search conditions required for a search for the desired entry information.

Additionally, in the present embodiment, the detected directories are represented in the same format as that required for any directory to be entered into the "Search Root" item, which helps the user, after selecting one of the detected directories, in determining whether or not the selection is correct.

### 2.1.2. COMMUNICATION CONNECTION CHECK PROCESS

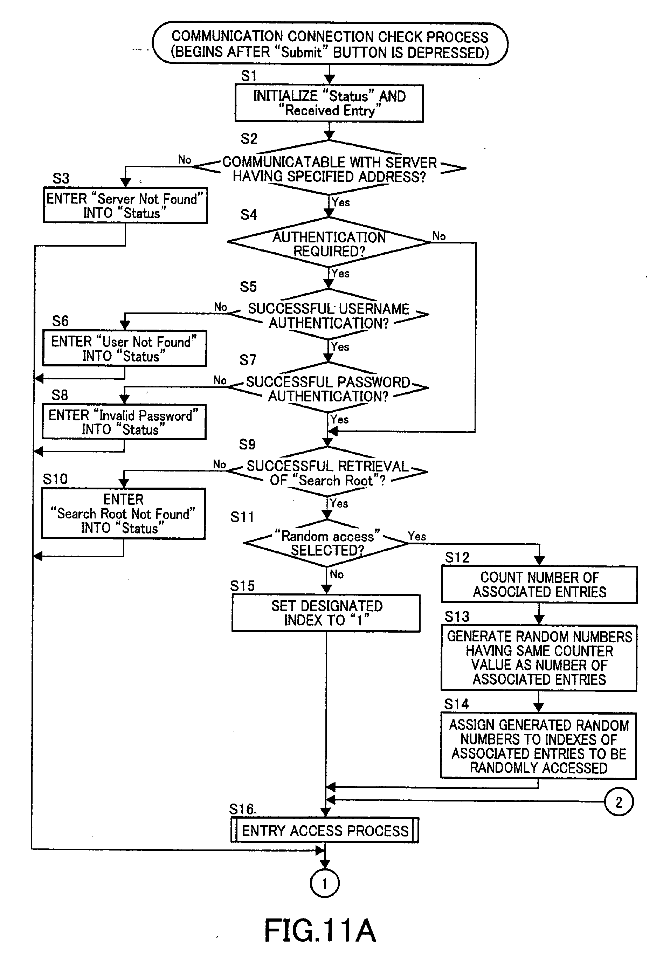

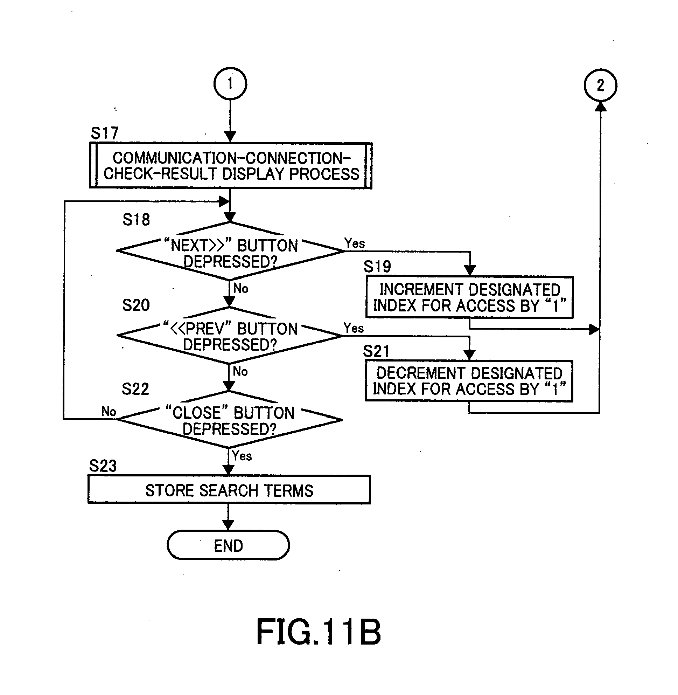

Referring next to Figs. 11A and 11B, the communication connection check process will be described. The communication connection check process is configured to include an entry information accessing process effected for accessing a plurality of sets of candidate entry information in a user-selectable fashion.

Figs. 11A and 11B illustrate conceptually in flow chart a portion of the communication connection check program 13e which has been assigned to perform the communication connection check process.

When the user specifies the various conditions required for this communication connection check process and then depresses the "Submit" button, both on the setting screen-page of Fig. 8, this communication connection check process begins with step S1 in which the CPU 11 of the multi-function peripheral 10 initializes a "Status" area and a "Received Entry" area assigned to the work memory 12a of the multi-function peripheral 10.

Next, the CPU 11 of the multi-function peripheral 10 determines whether or not the multi-function peripheral 10 is communicatable with the directory server 30, which has been identified by a user-designated address entered in the "LDAP Server Address" on the setting screen-page of Fig. 8 (step S2).

If the multi-function peripheral 10 is not communicatable with the directory server 30 having the user-designated address ("No" branch of step S2), then "Server Not Found" is entered into the "Status" area (step S2).

If, however, the multi-function peripheral 10 is communicatable with the directory server 30 having the user-designated address ("Yes" branch of step S2), then the CPU 11 of the multi-function peripheral 10 determines whether or not authentication is required for access to the directory server 30 (step S4). The authentication includes two steps, username authentication and password authentication, both by the directory server 30.

If any authentication is not required ("No" branch of step S4), then this communication connection check process proceeds to step S9.

If, however, the authentication is required ("Yes" branch of step S4), then the CPU 11 of the multi-function peripheral 10 determines whether or not the username authentication by the directory server 30 was successful (step S5). If the username authentication by the directory server 30 was unsuccessful ("No" branch of step S5), then "User Not Found" is entered into the "Status" area.

If, however, the username authentication by the directory server 30 was successful ("Yes" branch of step S5), then the CPU 11 of the multi-function peripheral 10 determines whether or not the password authentication by the directory server 30 was successful (step S7). If the password authentication by the directory server 30 was unsuccessful ("No" branch of step S7), then "Invalid Password" is entered into the "Status" area (step S8).

If the password authentication by the directory server 30 was successful ("Yes" branch of step S7), or any authentication is not required ("No" branch of step S4), then the CPU 11 of the multi-function peripheral 10 determines whether or not the search at the directory server 30 for the directory in the "Search Root" item in Fig. 8 was successful (step S9).

The directory in the "Search Root" item is a so-called root directory which has been identified at the "Search Root" item and which is to be located in the directory server 30.

If the search at the directory server 30 for the directory in the "Search Root" was unsuccessful ("No" branch of step S9), then "Search Root Not Found" is entered into the "Status" area (step S10).

If, however, the search at the directory server 30 for the directory in the "Search Root" was successful ("Yes" branch of step S9), then the CPU 11 of the multi-function peripheral 10 determines whether or not the "Random access" has been selected by the user in the "Settings for Connection Test" item on the setting screen-page of Fig. 8 (step S11).

If the "Random access" has been selected ("Yes" branch of step S11), then the CPU 11 of the multi-function peripheral 10 determines a "number of associated entries" (step S12).

In this regard, the "number of associated entries" means the number of sets of entry information (hereinafter, also referred to as "entries") associated with directories (hereinafter, referred to as "subordinate directories") located below the root directory in the database 34c of the directory server 30.

Next, the CPU 11 of the multi-function peripheral 10 generates random numbers having the same counter value as the "number of associated entries" (step S13). More specifically, at step S13, consecutive numbers (e.g., "1" through "n," n: the "number of associated entries") are arranged in a randomly determined sequence.

Step S13, when the "Random access" has been selected, is implemented for randomly accessing a plurality of sets of entry information associated with the subordinate directories defined relative to the current root directory.

That is to say, when the "Random access" has been selected, a plurality of sets of associated entry information are randomly accessed from the directory server 30. The plurality of sets of associated entry information act as a plurality of sets of candidate entry information possibly including at least one set of desired entry information.

As well known in the art, the sets of associated entry information have been assigned a plurality of indexes in a regular order, and access to individual sets of associated entry information is made by referring to the indexes of the sets of associated entry information.

Next, the CPU 11 of the multi-function peripheral 10 rearranges the sets of associated entry information in a random order, by modifying the original indexes of the sets of associated entry information to the generated random numbers, respectively (step S14) .

If, however, the "Random access" has not been selected ("No" branch of step S11), then the CPU 11 of the multi-function peripheral 10 sets a designated index used for next accessing or addressing one of the sets of associated entry information stored in the database 34c of the directory server 30, to "1" (step S15).

The designated index is used for identifying one of the sets of associated entry information by referring to the indexes of these sets of associated entry information. Therefore, the designated index determines which set of associated entry information is next going to be accessed.

In any case, the CPU 11 of the multi-function peripheral 10 accesses one of the sets of associated entry information stored in the database 34c of the directory server 30, whose index is equal to the designated index (step S16).

### 2.1.2.1. ENTRY ACCESS PROCESS

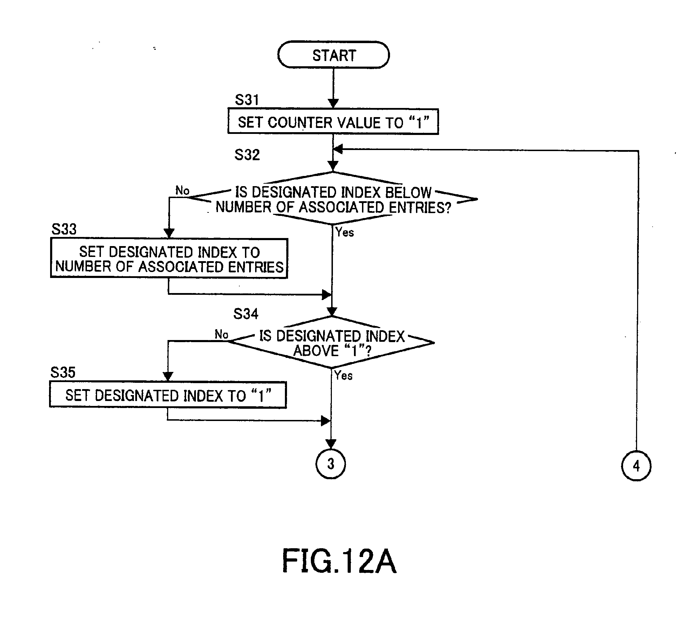

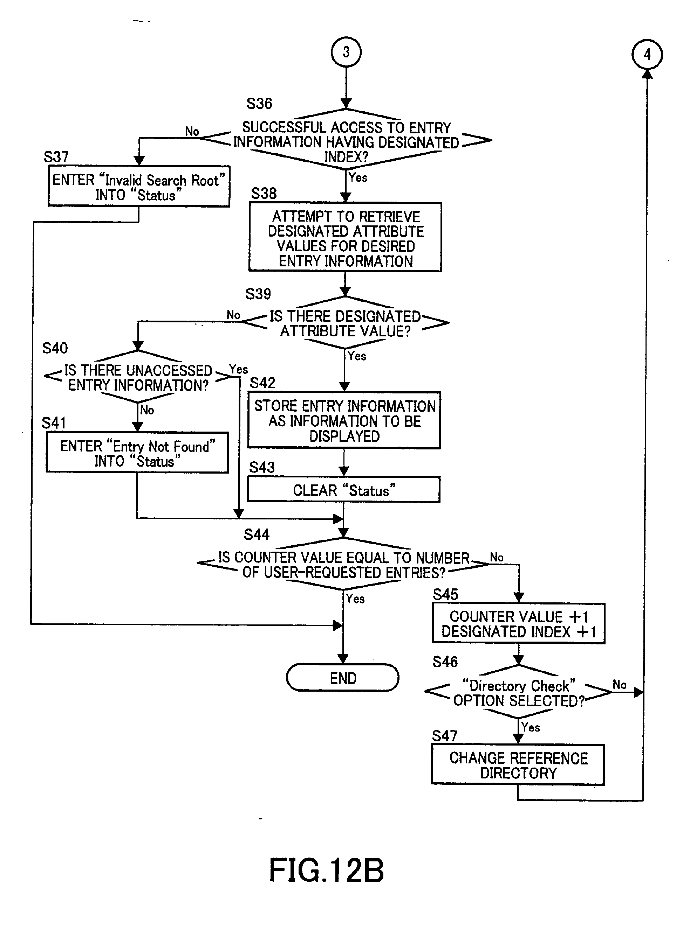

The CPU 11 of the multi-function peripheral 10 effects an entry access process (step S16). This entry access process is illustrated in greater detail in Figs. 12A and 12B.

This entry access process begins with step S31 in which the CPU 11 of the multi-function peripheral 10 initializes a counter value assigned to the work memory 12a, to thereby set the count value to "1."

At step S32, the CPU 11 of the multi-function peripheral 10 determines whether or not the designated index which has been defined by implementation of a step precedent to step S32 (i.e., a corresponding one of steps S14, S15, S19 and S21), is equal to or less than the "number of associated entries," which is to say, the number of sets of associated entry information stored in the database 34c of the directory server 30.

Unless the designated index is equal to or less than the "number of associated entries" ("No" branch of step S32), then the designated index is set to a value equal to the "number of associated entries" (step S33). Next, the CPU 11 of the multi-function peripheral 10 determines whether or not the designated index is equal to or greater than "1" (step S34). If not ("No" branch of step S34), then the designated index is set to "1" (step S35).

Implementation of steps S32 through S35 allows the designated index to be ensured to fall within a range of "1" through the "number of associated entries."

At step S36, the CPU 11 of the multi-function peripheral 10 attempts to access one of the sets of associated entry information stored in the database 34c of the directory server 30. The one set of associated entry information is required to have its index equal to the designated index which has been defined by implementation of steps precedent to step S36.

At step S36, the CPU 11 of the multi-function peripheral 10 determines whether or not the attempt to access the one set of associated entry information was successful.

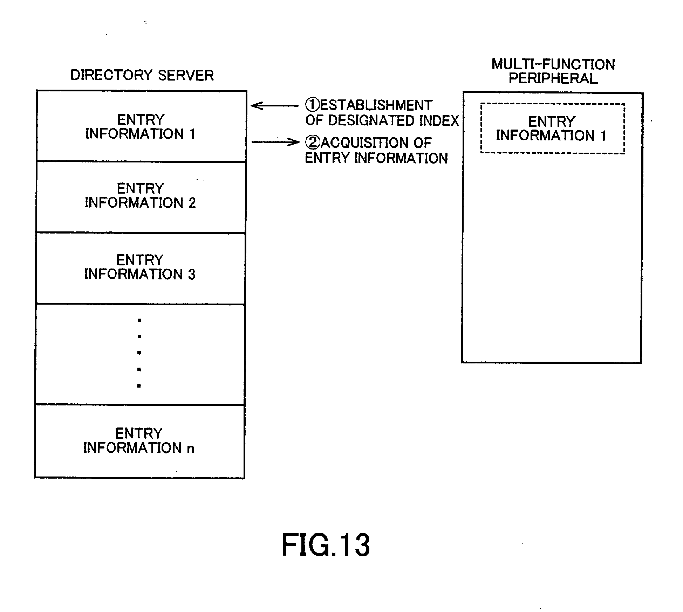

For example, when the designated index is set to "1," a set of associated entry information numbered "1" is accessed from the directory server 30 to the multi-function peripheral 10, as conceptually illustrated in Fig. 13.

If the attempt to access one set of associated entry information was unsuccessful ("No" branch of step S36), then the CPU 11 of the multi-function peripheral 10 enters "Invalid Search Root" into the "Status" area (step S37).

If, however, the attempt to access one set of associated entry information was successful ("Yes" branch of step S36), then the CPU 11 of the multi-function peripheral 10 attempts to retrieve the designated attribute value(s) for the accessed entry information having the designated index (step S38). As described above, the designated attribute values are ones that the user has entered into the "Attribute of Detail" items on the setting screen-page of Fig. 8.

The CPU 11 of the multi-function peripheral 10 determines whether or not any designated attribute value retrieved exists (step S39). If not ("No" branch of step S39), then the CPU 11 of the multi-function peripheral 10 determines whether or not at least one set of associated entry information remaining unaccessed has been stored in the database 34c of the directory server 30 (step S40).

If there is no designated attribute value ("No" branch of step S39), but if at least one set of associated entry information remains unaccessed ("Yes" branch of step S40), then the CPU 11 of the multi-function peripheral 10 proceeds to step S44.

In contrast, if there is no designated attribute value ("No" branch of step S36), and if at least one set of associated entry information does not remain unaccessed ("No" branch of step S40), then the CPU 11 of the multi-function peripheral 10 enters "Entry Not Found" into the "Status" area (step S41). Thereafter, the CPU 11 of the multi-function peripheral 10 proceeds to step S44.

If there is any designated attribute value for the current set of associated entry information having the designated index ("Yes" branch of step S39), then the CPU 11 of the multi-function peripheral 10 stores the current set of associated entry information into the work memory 12a of the multi-function peripheral 10, as information to be displayed or presented to the user (step S42). Subsequently, the CPU 11 of the multi-function peripheral 10 clears the content of the "Status" area (step S43).

Next, the CPU 11 of the multi-function peripheral 10 determines whether or not the counter value is coincident with the number of user-requested entries that the user has entered into the aforementioned "Number of Entry" item on the setting screen-page of Fig. 8 (step S44).

By definition, the number of user-requested entries means the number of sets of entry information requested to be displayed on a display screen at one time. The counter value means, as described above, the number of sets of entry information which has been already accessed from the directory server 30.

If the counter value is equal to the number of user-requested entries ("Yes" branch of step S44), then this entry access process ends.

If, however, the counter value is not equal to the number of user-requested entries ("No" branch of step S44), then the CPU 11 of the multi-function peripheral 10 increments the counter value and the designated index each by "1" (step S45).

Next, the CPU 11 of the multi-function peripheral 10 determines whether or not the user has selected the "Directory Check" option in the "Setting for Connection Test" item on the setting screen-page of Fig. 8 (step S46). If not ("No" branch of step S46), then the CPU 11 of the multi-function peripheral 10 returns to step S32.

If, however, the user has selected the "Directory Check" option ("Yes" branch of step S46), then the CPU 11 of the multi-function peripheral 10 changes a reference directory (e.g., a root directory) from its current one into a next one (step S47), eventually returning to step S32.

In any case, the CPU 11 of the multi-function peripheral 10 continues accessing ones of the sets of associated entry information until the counter value reaches the number of user-requested entries.

If the counter value reaches the number of user-requested entries ("Yes" branch of step S44), then the CPU 11 of the multi-function peripheral 10 terminates this entry access process, eventually proceeding to step S17 of Fig. 11B.

### 2.1.2.2. COMMUNICATION-CONNECTION-CHECK-RESULT DISPLAY PROCESS

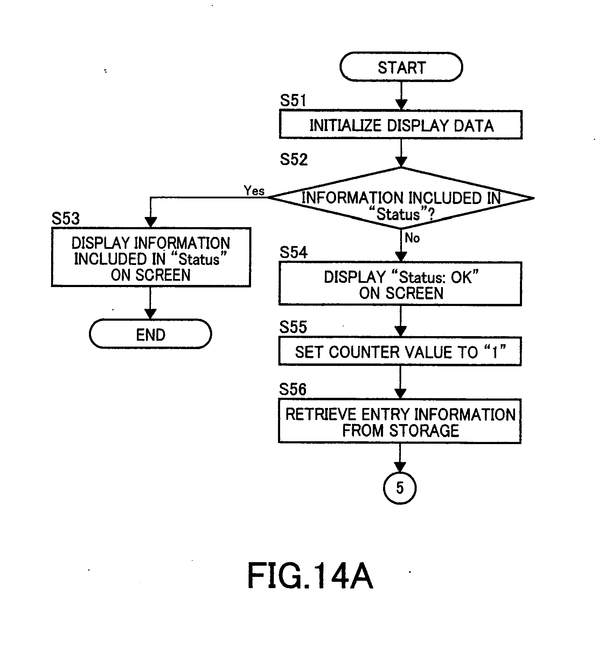

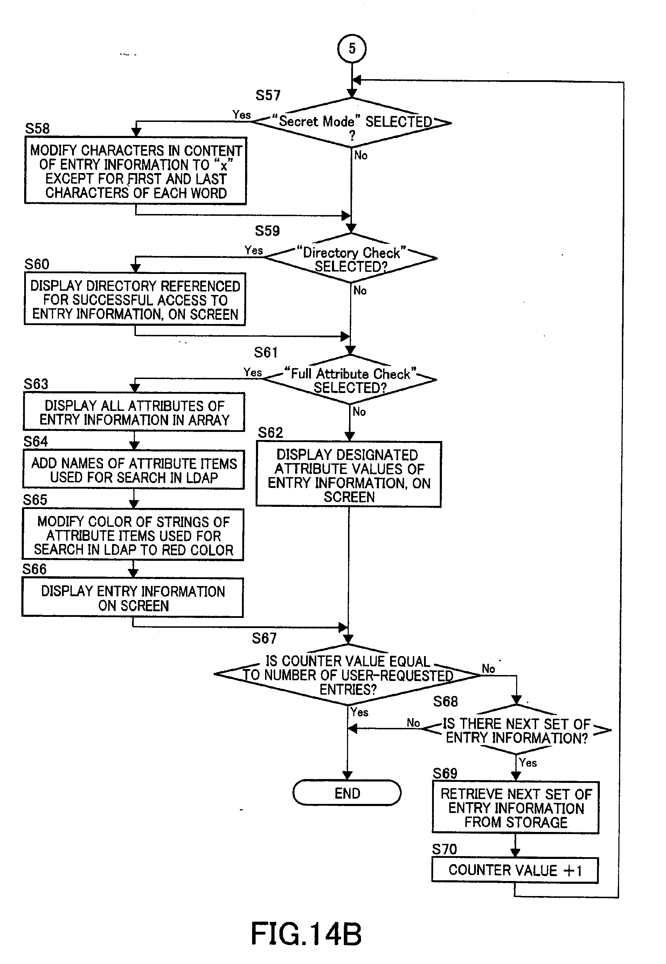

At step S17, the CPU 11 of the multi-function peripheral 10 effects a communication-connection-check-result display process. This communication-connection-check-result display process is conceptually illustrated in Figs. 14A and 14B in flow chart in greater detail.

This communication-connection-check-result display process begins with step S51 in which the CPU 11 of the multi-function peripheral 10 initializes display data. Next, the CPU 11 of the multi-function peripheral 10 determines whether or not the "Status" area includes any information (step S52).

If the "Status" area includes any information ("Yes" branch of step S52), then the CPU 11 of the multi-function peripheral 10 causes the terminal 50 to display the information included in the "Status" area, on the display screen (i.e., the display section 58) of the terminal 50 (step S53).

Because the information included in the "Status" area indicates an unsuccessful transaction between the multi-function peripheral 10 and the directory server 30, the presentation of such information makes the user to notice that acquisition of desired entry information was failed. That is to say, in this instance, the user is informed of the incapability of the multi-function peripheral 10 utilizing entry information stored in the directory server 30.

If the "Status" area includes no information ("No" branch of step S52), then the CPU 11 of the multi-function peripheral 10 causes the terminal 50 to display a message "Status: OK" on the display screen (i.e., the display section 58) of the terminal 50 (step S54).

Next, the CPU 11 of the multi-function peripheral 10 initializes a counter value to set it to "1" (step S55). Thereafter, the CPU 11 of the multi-function peripheral 10 retrieves from the work memory 12a, one of sets of entry information stored in the work memory 12a, as information to be displayed (step S56). The retrieved one set of entry information is what was first entered into the work memory 12a.

Subsequently, the CPU 11 of the multi-function peripheral 10 determines whether or not the user has selected the "Secret Mode" option in the "Setting for Connection Test" item on the setting screen-page of Fig. 8 (step S57).

If the user has selected the "Secret Mode" option ("Yes" branch of step S57), then the CPU 11 of the multi-function peripheral 10 edits a current set of entry information which has been stored in the work memory 12a as information to be displayed, such that characters included in the content of the instant entry information are each modified uniformly to a character "x" except for the first and last characters of each word included in the same content. This edit prevents selected types of information from being presented (step S58).

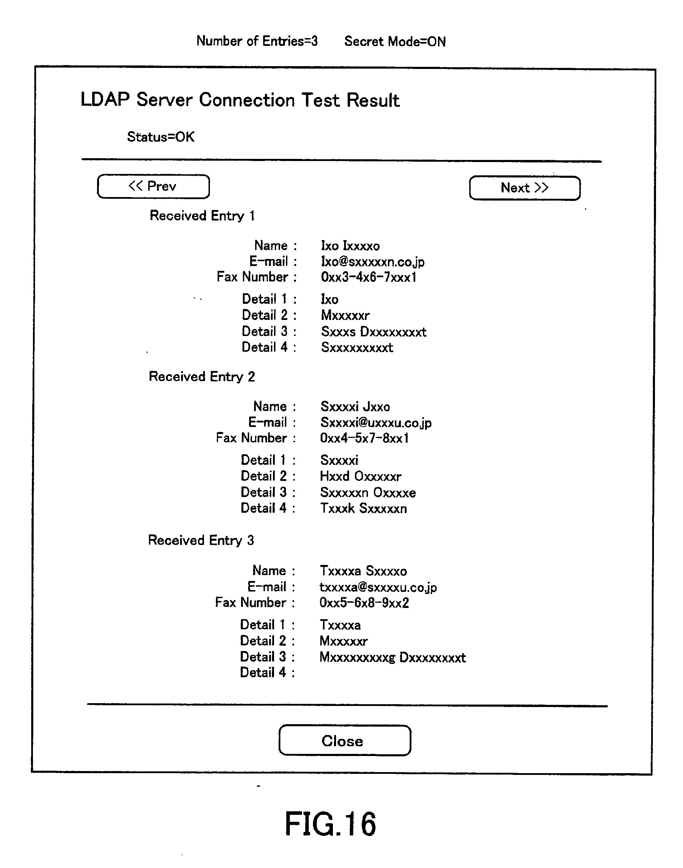

In other words, in the secret mode, credential or sensitive information such as personal information, a password, etc. is not presented, such as illustrated in Fig. 16.

In any case, next, the CPU 11 of the multi-function peripheral 10 determines whether or not the user has selected the "Directory Check" option (requesting a plurality of sets of entry information to be presented on a directory-by-directory basis) in the "Setting for Connection Test" item on the setting screen-page of Fig. 8 (step S59).

If the user has selected the "Directory Check" option ("Yes" branch of step S59, then the CPU 11 of the multi-function peripheral 10 allows the directory which was immediately previously referenced for successfully accessing entry information, to be displayed in the display screen of the terminal 50 (step S60).

In any case, next, the CPU 11 of the multi-function peripheral 10 determines whether or not the user has selected the "Full Attribute Check" option (requesting a plurality of sets of entry information to be presented with respect to all the attribute types) in the "Setting for Connection Test" item on the setting screen-page of Fig. 8 (step S61).

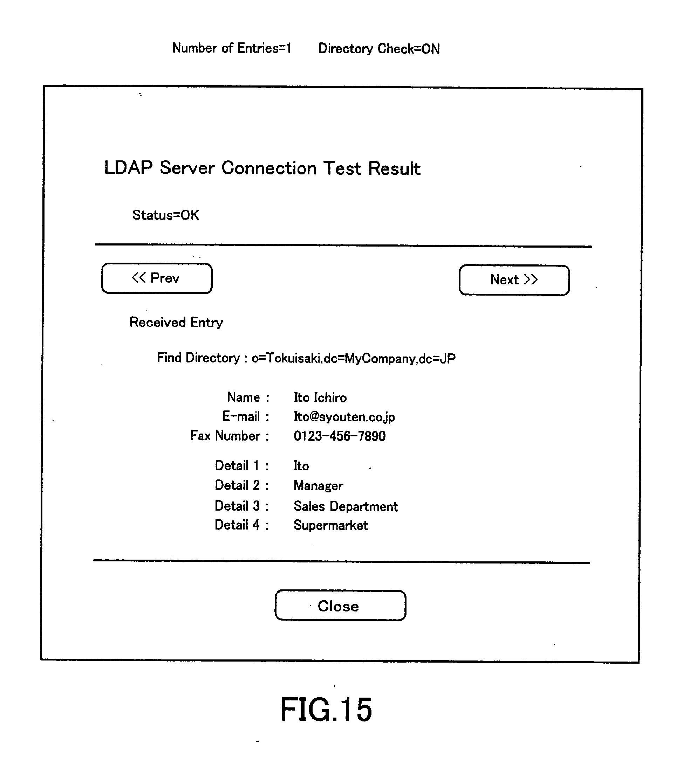

If the user has not selected the "Full Attribute Check" option ("No" branch of step S61), then the CPU 11 of the multi-function peripheral 10 causes the terminal 50 to display the associated entry information, with respect to the designated attribute values (i.e., items) on a communication-connection-check-result display screen-page on the display section 58 of the terminal 50, such as illustrated in Fig. 15 (step S62). In this regard, the designated attribute values are part of all the attribute values.

Fig. 15 illustrates an exemplary version of the communication-connection-check-result display screen-page where the "Number of Entries" has been set to "1," and the "Directory Check" option has been selected. Therefore, in this illustration, the identity of the referenced directory is presented.

Fig. 16 illustrates an exemplary version of the communication-connection-check-result display screen-page where the "Number of Entries" has been set to "3," and the "Secret Mode" option has been selected. Therefore, in this illustration of the secret mode, the associated entry information is presented with its part being invisible. Such presentation would reduce the risk of information leaks.

If, however, the user has selected the "Full Attribute Check" option ("Yes" branch of step S61), then the CPU 11 of the multi-function peripheral 10 allows the entire content of each set of associated entry information to be presented (step S63).

Next, the CPU 11 of the multi-function peripheral 10 adds names of attribute items used for a search in the LDAP environment, to the communication-connection-check-result display screen-page (step S64).

Thereafter, the CPU 11 of the multi-function peripheral 10 sets the color of the strings of the attribute items used for a search in the LDAP environment, to a different color from that of other strings, for example, red color (step S65).

Following that, the CPU 11 of the multi-function peripheral 10 causes the terminal 50 to display the current entry information on the display screen of the terminal 50 (step S66).

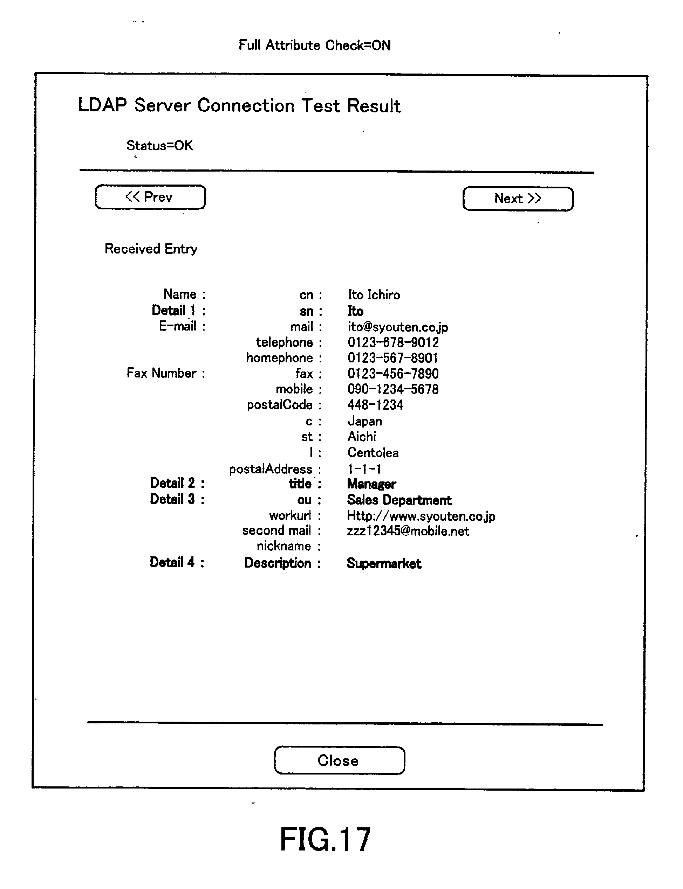

Fig. 17 illustrates an exemplary version of the communication-connection-check-result display screen-page where the "Full Attribute Check" option has been selected. In this figure, the characters to be red-colored are presented in bold letters. The presentation of entry information with different colors promotes the user in understanding the content of the entry information.

Next, the CPU 11 of the multi-function peripheral 10 determines whether or not the counter value is coincident with the number of user-requested entries (step S67). If so ("Yes" branch of step S67), then this communication-connection-check-result display process ends.

If, however, the counter value is not coincident with the number of user-requested entries ("No" branch of step S67), then the CPU 11 of the multi-function peripheral 10 determines whether or not the sets of entry information stored in the work memory 12a include a set of entry information to be next retreived (step S68). If not ("No" branch of step S68), then this communication-connection-check-result display process ends.

If, however, there is the set of entry information to be next retrieved in the work memory 12a ("Yes" branch of step S68), then the CPU 11 of the multi-function peripheral 10 retrieves the next set of entry information from the work memory 12a (step S69). Thereafter, the CPU 11 of the multi-function peripheral 10 increments the counter value by "1" (step S70).

After return to step S57, the CPU 11 of the multi-function peripheral 10 causes the terminal 50 to display entry information at step S62 or S66.

Upon completion of this communication-connection-check-result display process, the CPU 11 of the multi-function peripheral 10, at step S18 of Fig. 11B, determines whether or not the user depressed a "Next>>" button on a communication-connection-check-result screen-page (see Fig. 15, for example).

If the user depressed the "Next>>" button ("Yes" branch of step S18), then the CPU 11 of the multi-function peripheral 10 increments the designated index by "1" (step S19).

After returning to step S16, the CPU 11 of the multi-function peripheral 10 repeats the entry access process (step S16) and the communication-connection-check-result display process (step S17).

If, however, the user did not depress the "Next>>" button ("No" branch of step S18), and if, alternatively, the user depressed a "<<Prev" button on the communication-connection-check-result screen-page (see Fig. 15, for example) ("Yes" branch of step S20), then the CPU 11 of the multi-function peripheral 10 decrements the designated index by "1" (step S21).

After returning to step S16, the CPU 11 of the multi-function peripheral 10 repeats the entry access process (step S16) and the communication-connection-check-result display process (step S17).

If the user did not depress a "Close" button on the communication-connection-check-result screen-page (see Fig. 15, for example) ("No" branch of step S22), then the CPU 11 of the multi-function 10, after returning to step S18, repeats similar implementations.

If, however, the user depressed the "Close" button ("Yes" branch of step S22), then the CPU 11 of the multi-function peripheral 10 enters the search terms (see Fig. 8) into the memory 16 of the multi-function peripheral 10(step S23), resulting in termination of all the associated sub-processes, which is to say, the communication connection check process.

### 2.2. DATA TRANSMISSION PROCESS

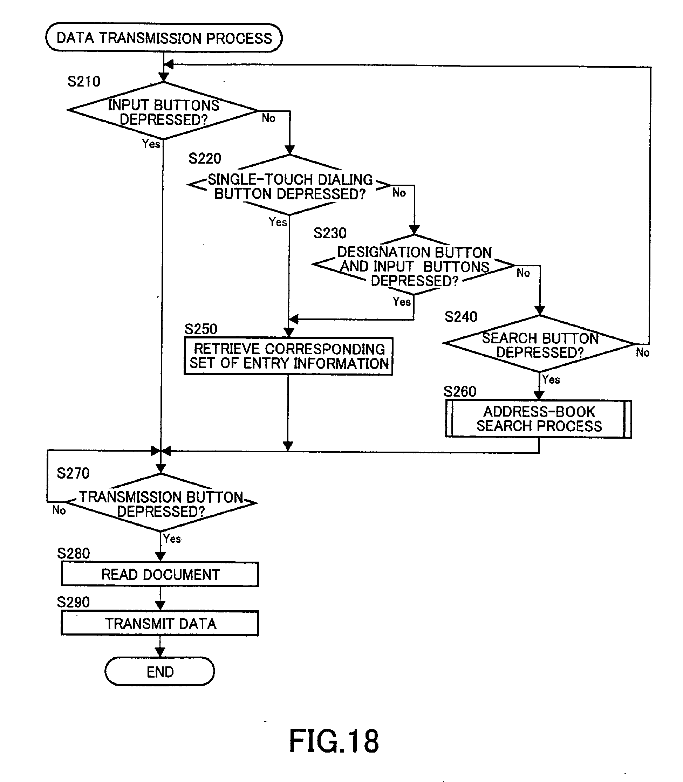

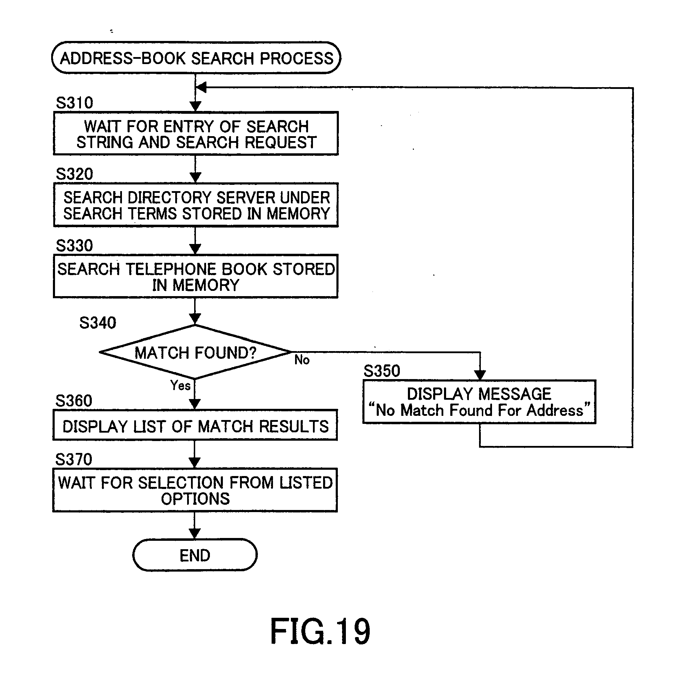

After completion of the communication connection check process, the CPU 11 of the multi-function peripheral 10 effects the data transmission process in response to a transmission request from the user. This data transmission process will be described with reference to Figs. 18 and 19.

This data transmission process is performed by execution of the aforementioned communication program 13d and the search program 13f.

Fig. 18 is a flow chart conceptually illustrating the communication program 13d, while Fig. 19 is a flow chart conceptually illustrating a detailed version of step S260 depicted in Fig. 18, which is to say, the search program 13f.

The multi-function peripheral 10, once being loaded by the user with a document to be transmitted, enters a wait state for a user entry via the input section 21 of the multi-function peripheral 10. The user is supposed to perform a selected one of the following actions on the input section 21:
(1) Action 1: Direct entry of a facsimile number of the transmission destination by manipulating the input buttons 21a of the multi-function peripheral 10 ("Yes" branch of step S210);
(2) Action 2: Depressing a selected one of the single-touch dialing buttons 21b of the multi-function peripheral 10 ("Yes" branch of step S220);
(3) Action 3: Selection of the quick dialing mode of the multi-function peripheral 10 by depressing the designation button 21f and the input buttons 21a ("Yes" branch of step S230); and
(4) Action 4: Depressing the search button 21g for conducting a search for the desired transmission destination information by referring to the previously-entered telephone book and/or the directory server 30 ("Yes" branch of step S240).

If the user conducted action 1 by entering the desired facsimile number via the input buttons 21a ("Yes" branch of step S210), and if the user depressed the transmission button 21e ("Yes" branch of step S270), then the multi-function peripheral 10 reads or scans an image on the document placed on the multi-function peripheral 10 (step S280).

Thereafter, the multi-function peripheral 10 transmits data to the destination having the entered facsimile number or e-mail address (step S290). Then, this data transmission process ends.

In contrast, if the user conducted action 2 by depressing a selected one of the single-touch dialing buttons 21b ("Yes" branch of step S220), or conducted action 3 by depressing the designation button 21f and the input buttons 21a ("Yes" branch of step S230), then the multi-function peripheral 10 retrieves transmission destination information corresponding to the user action(s), from the memory 16 (step S250).

More specifically, the corresponding transmission destination information has been stored in association with which one of the single-touch dialing buttons 21b was depressed or which ones of the input buttons 21a and the designation button 21f were sequentially depressed.

Thereafter, the multi-function peripheral 10 transmits data to the destination identified by the retrieved transmission destination information (steps S270-S290). Then, this data transmission process ends.

As will be evident from the foregoing, when the user selected one of actions 1-3, the multi-function peripheral 10 does not conduct a search at the directory server 30 for desired entry information.

If the user conducted action 4 by depressing the search button 21g ("Yes" branch of step S240), then the multi-function peripheral 10 effects an address-book search process (step S260).

In this address-book search process, although will be described in greater detail below, the multi-function peripheral 10 searches the directory server 30 under the search terms stored in the memory 16, for a desired one of sets of entry information stored in the directory server 30 and/or searches the telephone book entered in the multi-function peripheral 10.

Thereafter, the multi-function peripheral 10 retrieves the desired facsimile number used for a data transmission and/or the desired e-mail address used for an e-mail transmission, from the retrieved desired entry information, and/or from the telephone book, and then performs a data transmission including a facsimile transmission and an e-mail transmission (steps S270-S290). Then, this data transmission process ends.

### ADDRESS-BOOK SEARCH PROCESS

Referring next to Fig. 19, the address-book search process effected at step S260 of Fig. 18 will be described in greater detail below.

This address-book search process is effected by execution of the search program 13f. Fig. 19 conceptually illustrates the search program 13f in flow chart.

Once the user depressed the search button 21g on the control panel 110 of the multi-function peripheral 10 ("Yes" branch of step S240 in Fig. 18), then the multi-function peripheral 10 enters a wait state for entry of a search string (s) and a search request (step S310).

The search string(s) is used for selection of desired entry information from a plurality of sets of candidate entry information associated with subordinate ones of a plurality of directories relative to a root directory, as described below, while the search term to be entered by the user on the setting screen-page of Fig. 8 is used for a root directory or candidate root directories which are used for searching for the sets of candidate entry information.

Next, the multi-function peripheral 10 conducts a search on the database 34c of the director server 30 for desired entry information which matches search terms, and then retrieves the matched entry information (step S320).

For example, if the user entered a "Yamada" string as a search string (an exemplary second search term) via manipulating the input buttons 21a, and then depressed the enter button 21d for issuing a search request, then the multi-function peripheral 10 attempts to conduct a search on the database 34c for desired entry information which matches the search string "Yamada" and the search terms stored in the memory 16.

More specifically, in an attempt to search the database 34c stored in the directory server 30 for desired entry information, a first-step search is conducted on the database 34c for sets of entry information which matches the search terms (see Fig. 18, for example) stored in the memory 16.

Next, a second-step search is conducted through all the matched sets of entry information for retrieval of ultimate sets of entry information including the same strings as the search strings entered by the user at step S310.

Still more specifically, in the case where the search terms established on the exemplary setting screen-page of Fig. 8 are used, sets of entry information, as a result of the first-step search, are retrieved which are associated with a directory named "KaihatuCenter."

The directory named "KaihatuCenter" is located immediately below a directory named "YourCompany," which is located immediately below a directory named "JP."

In this instance, a directory named "Dail Kaihatubu" and a directory named "Dai2 Kaihatubu" each constitute a candidate directory, and entry information owned by the directory named "Dail Kaihatubu" and entry information owned by the directory named "Dai2 Kaihatubu" each constitute candidate entry information or associated entry information.

In this instance, there are a plurality of directories (hereinafter, referred to as "subordinate directories") located below those two candidate directories.

Among a plurality of sets of entry information associated with the plurality of subordinate directories, a sub-plurality of sets of entry information which include the entered search string "Yamada" are retrieved as ultimate sets of entry information, as a result of the second-step search.

Next, the multi-function peripheral 10 proceeds to step S330 to search through the telephone book stored in the memory 16 of the multi-function peripheral 10, for retrieval from the telephone book of entry information matching the search string entered at step S310.

It is added that, in the present embodiment, although the search at the memory 16 follows the search at the directory server 30, the order in which these two searches are conducted sequentially is not exclusive.

If the searches conducted at steps S320 and S330 resulted in no matched entry information ("No" branch of step S340), then the multi-function peripheral 10 displays on the display panel 22p a message indicating that there is no matched entry information (step S350), eventually returning to step S310 to display a search-string entry screen-page, in a wait state for a user entry via the search-string entry screen-page.

If, however, the searches conducted at steps S320 and S330 resulted in the occurrence of matched entry information ("Yes" branch of step S340), then the multi-function peripheral 10 displays on the display panel 22p a list of search results or match results (step S360). The list of search results includes a person-name part of the matched entry information.

In the case where "Yamada" was entered as a search string, the entered search string matches entry information "Taro Yamada" and entry information "Jiro Yamada," among all the sets of entry information stored in the database 34c of the directory server 30 (see Fig. 5).

Therefore, in this case, the list of search results is displayed on the display panel 22p so as to include entry information "Taro Yamada" and entry information "Jiro Yamada."

If the telephone book stored in the memory 16 includes additional entry information matching the search string, then the list of search results provided from the directory server 30 is displayed together with a list of search results provided from the telephone book (step S360).

Following that, the multi-function peripheral 10, at step S370, enters a wait state for a user selection of a called party or a transmission destination from the list of search results displayed as a result of implementation of step S360.

At this stage, the user is allowed to select an arbitrary one of candidate transmission destinations included in the displayed list of search results, by manipulating the selection button 21c. The selection button 21c may be configured to include four triangle-shaped sub-buttons or keys, for example, as illustrated in Fig. 3.

Upon selection of a desired transmission destination, the multi-function peripheral 10 proceeds to step S280 of Fig. 18.

It is added that the multi-function peripheral 10 may be modified to display detailed additional information of the retrieved entry information from the database 34c of the directory server 30, in response to a user manipulation on the selection button 21c (e.g., a right-hand triangle-shaped key depicted in Fig. 3).

As will be evident from the foregoing, in the present embodiment, a portion of the multi-function peripheral 10 which is assigned to execute at least the program depicted in Fig. 9 constitutes an example of the aforementioned directory retriever, and a portion of the multi-function peripheral 10 which is assigned to execute at least the program depicted in Figs. 11A and 11B constitutes an example of the aforementioned address information retriever.

Further, in the present embodiment, a portion of the multi-function peripheral 10 which is assigned to execute at least steps S135 and S150 in Fig. 9 constitutes an example of the aforementioned storing section, and a portion of the multi-function peripheral 10 which is assigned to execute at least the program depicted in Figs. 14A and 14B constitutes an example of the aforementioned output device.

Still further, in the present embodiment, a portion of the multi-function peripheral 10 which is assigned to execute at least the program depicted in Figs. 14A and 14B constitutes an example of the aforementioned first display controller, and a portion of the multi-function peripheral 10 which is assigned to execute at least steps S140-150 constitutes an example of the aforementioned selector.

Additionally, in the present embodiment, a portion of the multi-function peripheral 10 which is assigned to execute at least the program depicted in Figs. 14A and 14B constitutes an example of the aforementioned second display controller.

Still additionally, in the present embodiment, a portion of the multi-function peripheral 10 which is assigned to execute at least steps S270 and S290 in Fig. 18 constitutes an example of the aforementioned data transmission control.

Further, in the present embodiment, a portion of the multi-function peripheral 10 which is assigned to execute at least steps S31, S44 and S45 in Figs. 12A and 12B constitutes an example of the aforementioned counter, and a portion of the multi-function peripheral 10 which is assigned to execute at least steps S11-S16 in Figs. 11A and 11B constitutes an example of the aforementioned access section.

Still further, in the present embodiment, a portion of the multi-function peripheral 10 which is assigned to execute at least step S15 in Fig. 11A constitutes an example of the aforementioned sequential access unit, a portion of the multi-function peripheral 10 which is assigned to execute at least steps S12-S14 in Fig. 11A constitutes an example of the aforementioned random access unit, and a portion of the multi-function peripheral 10 which is assigned to execute at least step S11 in Fig. 11A constitutes an example of the aforementioned access unit selector.

Although the invention has been described above by way of an example of the present embodiment for the illustrative purposes, the invention may be practiced in any modified version.

For example, the present embodiment is configured to prompt the user to enter a keyword in the form of a part of a directory name of a root directory to be retrieved (which is to say, to be entered into the "Search Root" item).

Alternatively or additionally, the invention may be practiced such that, when auxiliary information attached to a directory name has been stored in the database 34c together with primary information of each directory, a search on the database 34c for a desired root directory alternatively or additionally by referring to the stored auxiliary information.

Further, when the invention is practiced such that auxiliary information attached to a directory name has been stored in the database 34c together with primary information of each directory, the invention may be practiced in an arrangement allowing, when a plurality of directories are retrieved to match a common keyword, the presentation of the auxiliary information attached to the matched directories, in addition to the primary information of the matched directories.

Still further, the invention may be practiced in an alternative arrangement in which selected directories are displayed such that strings of the selected directories which match a user-entered keyword are highlighted (e.g., in different color).

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. An apparatus for searching a hierarchical directory structure for desired address information, the hierarchical directory structure being stored in and managed by an information management device in a manner that a plurality of directories are arranged in a multi-level, hierarchical structure in association with a plurality of sets of address information, the apparatus comprising:
a directory retriever arranged to search the information management device using at least one user-entered keyword as a search term, to thereby retrieve at least one of the plurality of directories which at least partially matches the keyword, as at least one associated directory; and
an address information retriever arranged to search the information management device using the at least one associated directory, to thereby retrieve a sub-plurality of the plurality of sets of address information as a plurality of sets of candidate address information, the plurality of sets of candidate address information being associated with at least one subordinate one of the plurality of directories, the at least one subordinate directory being located at one or more lower levels than that of the at least one associated directory in the hierarchical structure, wherein
the address information retriever is further arranged to access at least one arbitrary one of the plurality of sets of candidate address information as at least one set of output address information.

2. The apparatus according to claim 1, further comprising:
an address information retrieving device including the directory retriever and the address information retriever, the address information retrieving device being arranged to communicate with the information management device; and
a user-operable controller arranged to accept a user entry and supply the accepted user entry to the address information retrieving device.

3. The apparatus according to claim 2, wherein the user-operable controller includes a mobile terminal having a screen for display of information, the mobile terminal being arranged to communicate with the address information retrieving device via a wireless communication network.

4. The apparatus according to any one of claims 1-3, further comprising:
a storing section arranged to store identification information for identifying the at least one associated directory that was retrieved by the directory retriever, in a storage; and
an output device arranged to output the at least one set of output address information that was accessed by the address information retriever, wherein
the address information retriever is arranged to retrieve a sub-plurality of the plurality of sets of address information as the plurality of sets of candidate address information, the plurality of sets of candidate address information being associated with at least one subordinate one of the plurality of directories, the at least one subordinate directory being located at one or more lower levels than that of the at least one associated directory in the hierarchical structure, the at least one associated directory being identified by the identification information stored in the storage.

5. The apparatus according to any one of claims 1-4, further comprising:
a first display controller arranged to perform, in the presence of a plurality of associated directories retrieved by the directory retriever, a process for allowing the plurality of retrieved associated directories to be displayed; and
a selector arranged to select, in accordance with a user instruction, one of the plurality of displayed associated directories as one specific directory, wherein
the address information retriever is arranged to retrieve a sub-plurality of the plurality of sets of address information as the plurality of sets of candidate address information, the plurality of sets of candidate address information being associated with at least one subordinate one of the plurality of directories, the at least one subordinate directory being located at one or more lower levels than that of the selected one specific directory in the hierarchical structure.

6. The apparatus according to claim 5, wherein the first display controller is arranged to perform a process for allowing a list of the plurality of retrieved associated directories to be displayed.

7. The apparatus according to any one of claims 1-6, further comprising a second display controller arranged to perform a process for allowing at least one associated directory retrieved by the directory retriever to be displayed together and in association with directory information owned by at least one superior directory of the plurality of directories, the at least one superior directory being located at one or more higher levels than that of the at least one associated directory.

8. The apparatus according to any one of claims 1-7, wherein the address information includes destination information for use in identifying a destination to which data is to be transmitted,
the apparatus further comprising a data transmission controller arranged to perform a process for the data to be transmitted to the destination identified by the destination information within the address information retrieved by the address information retriever.

9. The apparatus according to any one of claims 1-8, wherein
the at least one associated directory includes a root directory at which a continued process of a search begins, and
the address information retriever includes:
a counter arranged to count a number of the plurality of sets of candidate address information; and
an access section arranged to access from the plurality of sets of candidate address information, at least one set of candidate address information having its total number identical to a user-designated number, as the at least one set of output address information.

10. The apparatus according to claim 9, wherein the access section includes a sequential access unit arranged to repeatedly access the at least one set of address information from the plurality of sets of candidate address information, one by one, in the same sequence as that in which the plurality of sets of candidate address information are arranged in the hierarchical structure.

11. The apparatus according to claim 9 or 10, wherein the access section includes a random access unit arranged to repeatedly access the at least one set of address information from the plurality of sets of candidate address information, one by one, in a random sequence.

12. The apparatus according to claim 9, wherein the access section includes:
a sequential access unit arranged to repeatedly access the at least one set of address information from the plurality of sets of candidate address information, one by one, in the same sequence as that in which the plurality of sets of candidate address information are arranged in the hierarchical structure;
a random access unit arranged to repeatedly access the at least one set of address information from the plurality of sets of candidate address information, one by one, in a random sequence; and
an access unit selector arranged to select, in accordance with a user instruction, one of the sequential access unit and the random access unit.

13. The apparatus according to any one of claims 1-12, wherein the information management device includes an LDAP server, and
the apparatus is arranged to communicate with the LDAP server via a wired or wireless network.

14. The apparatus according to claim 13, wherein the network is a WAN or a LAN.

15. A method of searching a hierarchical directory structure for desired address information, the hierarchical directory structure being stored in and managed by an information management device in a manner that a plurality of directories are arranged in a multi-level hierarchical structure in association with a plurality of sets of address information, the method comprising the steps of:
searching the information management device using at least one user-entered keyword as a search term, to thereby retrieve at least one of the plurality of directories which at least partially matches the keyword, as at least one associated directory;
searching the information management device using the at least one associated directory, to thereby retrieve a sub-plurality of the plurality of sets of address information as a plurality of sets of candidate address information, the plurality of sets of candidate address information being associated with at least one subordinate one of the plurality of directories, the at least one subordinate directory being located at one or more lower levels than that of the at least one associated directory in the hierarchical structure; and
accessing at least one arbitrary one of the plurality of sets of candidate address information as at least one set of output address information.

16. A computer readable medium which has stored therein a computer executable program which, when executed, implements the method set forth in claim 15.
